# EUROPEAN PATENT SPECIFICATION

(11) **EP 3 533 643 B1**
(45) Date of publication and mention of the grant of the patent: **14.07.2021**
(21) Application number: 19159728.5
(22) Date of filing: 27.02.2019
(51) Int. Cl.: B60J 7/08

(54) **TARPAULIN RETRACTION AND EXTENSION DEVICE**
PLANENRÜCKZIEH- UND -ERWEITERUNGSVORRICHTUNG
DISPOSITIF D'EXTENSION ET DE RÉTRACTION DE BÂCHES

(30) Priority: 01.03.2018 CA 2996958
(43) Date of publication of application: 04.09.2019
(60) Divisional application: 21152976.3
(73) Proprietor: Fabrication Elcargo Inc., Saint-Hyacinthe, Quebec J2R 1E4 (CA)
(72) Inventor: Royer, Real, Saint-Hyacinthe, Quebec J2T1P5 (CA); Boutin, Keven, Drummondville, Quebec J2E 0GB (CA)
(74) Representative: Turner, Craig Robert

(56) References cited:
- CA-A- 1 212 974
- US-A1- 2008 217 952
- US-A1- 2010 230 994
- US-A1- 2016 332 557

## Description

### FIELD OF THE INVENTION

The present invention relates generally to the field of transportation, and, more particularly, to a tarpaulin retraction and extension device usable for example with open top vehicle mounted containers.

### BACKGROUND

There are many systems for covering top apertures of truck-movable containers, such as open top truck trailers and the bin of dump trucks. Many such systems conveniently roll a tarpaulin covering the top aperture around a rod when the top aperture is uncovered. To facilitate operation of these system, many are provided with an electric motor. However, if the motor fails, the system becomes inoperable. One such device for manipulating a tarpaulin is disclosed in US 201010230994. It is usable in combination with an actuator and comprises a rod, a mounting bracket, an articulated linking element moveable between first and second configurations, and a transmission operatively coupled to the actuator and to the rod for rotating the rod about a longitudinal axis.

Against this background, there exists a need for an improved tarpaulin extension and retraction device. An object of the present invention is to provide such a device.

### SUMMARY OF THE INVENTION

In a broad aspect there is provided a device for handling a tarpaulin to cover at least part of a container using the tarpaulin, the container defining a container bottom wall, a container peripheral wall extending therefrom and a container top aperture delimited by a container top edge of the container peripheral wall opposed to the container bottom wall, the container top aperture defining an aperture first end and an opposed aperture second end, the tarpaulin defining a tarpaulin first end and an opposed tarpaulin second end, the tarpaulin being secured to the container at the tarpaulin first end opposed to the aperture second end and movable between tarpaulin retracted and extended configurations in which the tarpaulin is respectively retracted from the container top aperture and extended across the container top aperture, the device comprising: a rod defining a rod longitudinal axis, the rod being movable between rod first and second positions wherein the rod is respectively adjacent the aperture first and second ends, the tarpaulin being mountable to the rod at the tarpaulin second end to allow rolling of the tarpaulin thereonto and unrolling of the tarpaulin therefrom when the rod is rotated about the rod longitudinal axis; an actuator assembly, the actuator assembly including a motor, a crank, and a driving shaft defining a longitudinal driving shaft rotation axis, the actuator assembly being configurable between a motorized configuration and a manual configuration, wherein, in the motorized configuration, the motor is mechanically coupled to the driving shaft for selectively rotating the driving shaft about the driving shaft rotation axis when the motor is powered, and, in the manual configuration, the motor is uncoupled from the driving shaft and the crank is mechanically coupled to the driving shaft so that the crank is usable to selectively rotate the driving shaft independently of the motor; and a transmission assembly between the actuator assembly and the rod, the transmission assembly being operatively coupled to the actuator assembly and to the rod for transmitting rotations of the driving shaft to the rod so that rotation of the driving shaft about the driving shaft rotation axis causes rotation of the rod about the rod longitudinal axis. Rotating the rod using the actuator assembly to roll the tarpaulin therearound moves the rod towards the rod first position to move the tarpaulin to the tarpaulin retracted configuration and rotating the rod using the actuator assembly to unroll the tarpaulin therefrom moves the rod towards the rod second position to move the tarpaulin to the tarpaulin extended configuration.

There may also be provided a device further comprising a biasing element operatively coupled to the rod for biasing the rod towards the rod second position.

In the present device, the actuator assembly includes an intermediate shaft mechanically coupled to the motor so as to be rotatable thereby, the intermediate shaft defining a shaft passageway extending longitudinally therethrough coaxially with the driving shaft rotation axis, the driving shaft extending in the shaft passageway and protruding therefrom, the actuator assembly further comprising a shaft coupling element movable between coupling and uncoupling configurations, wherein in the coupling configuration, the shaft coupling element couples the intermediate shaft and driving shaft to each other so that the motor and driving shafts are jointly rotatable about the driving shaft rotation axis, and in the uncoupling configuration, the driving shaft is rotatable about the driving shaft rotation axis independently from the intermediate shaft.

There may also be provided a device wherein the intermediate shaft defines an intermediate shaft coupling portion and the driving shaft defines a driving shaft coupling portion, the shaft coupling element securing the intermediate and driving shaft coupling portions to each other in the coupling configuration.

There may also be provided a device wherein the intermediate and driving shaft coupling portions are adjacent to each other.

There may also be provided a devicewherein the shaft coupling element includes a collar, the collar receiving thereinto and overlapping at least part of each of the intermediate and driving shaft coupling portions in the locking configurations.

There may also be provided a device wherein the intermediate and driving shaft coupling portions each have a transversal cross-sectional configuration lacking continuous rotational symmetry.

There may also be provided a device wherein the intermediate and driving shaft coupling portions each have a polygonal transversal cross-sectional configuration.

There may also be provided a device wherein the shaft coupling element is selectively lockable in the coupling configuration.

There may also be provided a device wherein the shaft coupling element also includes a locking pin, the driving shaft coupling portions defining a pin receiving aperture extending laterally therethrough, the collar defining a pair of collar apertures extending laterally therethrough laterally opposed to each other, wherein, in the coupling configuration, the collar apertures are in register with the pin receiving aperture and the locking pin is insertable through both the collar apertures and the pin receiving aperture to lock the shaft coupling element in the coupling configuration.

There may also be provided a device wherein the crank is removably mountable to a protruding portion of the driving shaft that protrudes from the intermediate shaft opposite to the transmission.

There may also be provided a device wherein the device defines a crank receiving element for receiving the crank thereinto when the crank is detached from the protruding portion.

There may also be provided a device wherein the driving shaft is provided with a driving shaft gear extending circumferentially therearound, the crank being part of a crank assembly including a crank gear and a crank assembly body, the crank being operatively coupled to the crank gear for selectively rotating the crank gear relative to the crank assembly body, the crank assembly body being mountable to a remainder of the actuator assembly so that the crank and driving shaft gears are engaged with each other so that rotation of the crank causes rotation of the driving shaft.

There may also be provided a device further comprising a worm gear between the motor and the intermediate shaft coupling the motor and the intermediate shaft to each other so that the motor can rotate the intermediate shaft.

There may also be provided a device wherein the worm gear includes a worm driven by the motor and a worm wheel extending radially outwardly from the intermediate shaft and jointly rotatable therewith.

There may also be provided a device wherein the transmission assembly is configured and sized so that a distance between the driving shaft and the rod remains constant as the rod moves between the rod first and second positions.

There may also be provided a device further comprising a mounting bracket secured to the actuator and transmission assemblies for mounting the actuator and transmission assemblies to the container peripheral wall, the mounting bracket being configured and sized for allowing vertical movements of the actuator and transmission assemblies relative to the container peripheral wall when the mounting bracket is secured to the container peripheral wall.

There may also be provided a device wherein the mounting bracket includes a base fixedly securable to the container peripheral wall and a pair of levers extending parallel to each other and vertically spaced apart from each other, each lever being pivotally mounted at one end thereof to the base and pivotally mounted at another end thereof to one of the motor and transmission assemblies.

There may also be provided a device wherein the transmission assembly includes an elongated arm defining an arm longitudinal axis, the arm defining opposed arm first and second ends, the arm first end being adjacent to the driving shaft and the arm second end being adjacent to the rod, the arm being operatively coupled to the driving shaft and rod so that rotation of the driving shaft about the driving shaft rotation axis causes rotation of the arm about the arm longitudinal axis, which in turn causes rotation of the rod about the rod longitudinal axis, the arm extending perpendicular to the rod and being pivotable relative to the driving shaft between arm first and second positions, wherein the rod is respectively in the rod first and second positions.

There may also be provided a device wherein the arm is a fixed length arm.

There may also be provided a device wherein the transmission assembly includes a first 90 degrees gearbox between the arm and the driving shaft and a second 90 degrees gearbox between the arm and the rod, the arm being coupled to the first 90 degrees gearbox using a universal joint to allow pivotal movement of the arm between the arm first and second positions as the rod moves between the rod first and second positions.

In another broad aspect, there is provided a covered vehicle container, comprising: a container defining a container bottom wall, a container top aperture above the container bottom wall, opposed container first and second ends and opposed container first and second sides each extending between the container first and second ends, the container defining at least one tarpaulin support extending between the container first and second ends across the container top aperture; a tarpaulin defining tarpaulin first and second ends, the tarpaulin being secured to the container first end adjacent to the tarpaulin first end, the tarpaulin being movable between tarpaulin retracted and extended configurations in which the tarpaulin is respectively retracted from the container top aperture and extended across the container top aperture; and a device for handling the tarpaulin, the device including: a rod defining a rod longitudinal axis, the rod being movable between rod first and second positions wherein the rod is respectively adjacent the container first and second ends, the tarpaulin being mountable to the rod at the tarpaulin second end to allow rolling of the tarpaulin thereonto and unrolling of the tarpaulin therefrom when the rod is rotated about the rod longitudinal axis; an actuator assembly, the actuator assembly including a motor, a crank, and a driving shaft defining a longitudinal driving shaft rotation axis, the actuator assembly being configurable between a motorized configuration and a manual configuration, wherein, in the motorized configuration, the motor is mechanically coupled to the driving shaft for selectively rotating the driving shaft about the driving shaft rotation axis when the motor is powered, and, in the manual configuration, the motor is uncoupled from the driving shaft and the crank is mechanically coupled to the driving shaft so that the crank is usable to selectively rotate the driving shaft independently of the motor; a transmission assembly between the actuator assembly and the rod, the transmission assembly being operatively coupled to the actuator assembly and to the rod for transmitting rotations of the driving shaft to the rod so that rotation of the driving shaft about the driving shaft rotation axis causes rotation of the rod about the rod longitudinal axis; and a biasing element operatively coupled to the rod for biasing the rod towards the rod second position. Rotating the rod using the actuator assembly to roll the tarpaulin therearound moves the rod towards the rod first position to move the tarpaulin to the tarpaulin retracted configuration and rotating the rod using the actuator assembly to unroll the tarpaulin therefrom moves the rod towards the rod second position to move the tarpaulin to the tarpaulin extended configuration.

There may also be provided a covered vehicle container wherein the actuator assembly includes an intermediate shaft mechanically coupled to the motor so as to be rotatable thereby, the intermediate shaft defining a shaft passageway extending longitudinally therethrough coaxially with the driving shaft rotation axis, the driving shaft extending in the shaft passageway and protruding therefrom, the actuator assembly further comprising a shaft coupling element movable between coupling and uncoupling configurations, wherein in the coupling configuration, the shaft coupling element couples the intermediate shaft and driving shaft to each other so that the motor and driving shafts are jointly rotatable about the driving shaft rotation axis, and in the uncoupling configuration, the driving shaft is rotatable about the driving shaft rotation axis independently from the intermediate shaft.

There may also be provided a covered vehicle container wherein the intermediate shaft defines an intermediate shaft coupling portion and the driving shaft defines a driving shaft coupling portion, the shaft coupling element securing the intermediate and driving shaft coupling portions to each other in the coupling configuration.

There may also be provided a covered vehicle container wherein the intermediate and driving shaft coupling portions are adjacent to each other and wherein the shaft coupling element includes a collar, the collar receiving thereinto and overlapping at least part of each of the intermediate and driving shaft coupling portions in the locking configurations.

There may also be provided a covered vehicle container wherein the crank is removably mountable to a protruding portion of the driving shaft that protrudes from the intermediate shaft opposite to the transmission.

There may also be provided a covered vehicle container wherein the driving shaft is provided with a driving shaft gear extending circumferentially around part thereof, the crank being part of a crank assembly including a crank gear and a crank assembly body, the crank being operatively coupled to the crank gear for selectively rotating the crank gear relative to the crank assembly body, the crank assembly body being removable mountable to a remainder of the drive assembly so that the crank and driving shaft gear are engaged to each other so that rotation of the crank is causes rotation the driving shaft.

There may also be provided a covered vehicle container further comprising a worm gear between the motor and the intermediate shaft coupling the motor and the intermediate shaft to each other so that the motor can rotate the intermediate shaft.

There may also be provided a covered vehicle container wherein the transmission assembly includes an elongated arm defining an arm longitudinal axis, the arm defining opposed arm first and second ends, the arm first end being adjacent to the container bottom wall and the arm second end being adjacent to the container top aperture, the arm being operatively coupled to the driving shaft and rod so that rotation of the driving shaft about the driving shaft rotation axis causes rotation of the arm about the arm longitudinal axis, which in turn causes rotation of the rod about the rod longitudinal axis, the arm extending perpendicular to the rod and being pivotable relative to the driving shaft between arm first and second positions, wherein the rod is respectively in the rod first and second positions.

There may also be provided a covered vehicle container wherein the arm is a fixed length arm.

There may also be provided a covered vehicle container further comprising a mounting bracket, the mounting bracket including a base fixedly mounted to the container and a bracket mobile portion movable vertically relative to the container, the arm being mechanically coupled to the bracket mobile portion at the arm first end so that the arm first end is vertically movable along with the bracket mobile portion.

There may also be provided a covered vehicle container wherein the mounting bracket includes a pair of levers extending parallel to each other and vertically spaced apart from each other, each lever being pivotally mounted at one end thereof to the base and pivotally mounted at another end thereof to the bracket mobile portion.

There may also be provided a covered vehicle container wherein the actuator assembly is mounted to the bracket mobile portion.

There may also be provided a covered vehicle container wherein the base is mounted to the container on the container first side.

There may also be provided a covered vehicle container wherein the base is mounted midway between the container first and second ends.

There may also be provided a covered vehicle container wherein the actuator assembly is mounted to the container adjacent to one of the container first and second ends, the transmission including an intermediate gearbox and an extension shaft, the extension shaft extending between the driving shaft and the intermediate gearbox, the intermediate gearbox being mounted to the bracket mobile portion, and the arm being mounted to the intermediate gearbox, the actuator assembly, extension shaft, intermediate gearbox and arm being mechanically coupled to each other so that rotation of the driving shaft about the shaft longitudinal axis causes rotation of the arm about the arm longitudinal axis.

There may also be provided a covered vehicle container wherein the actuator assembly includes a crank assembly, the crank assembly including the crank and a crank assembly shaft axially rotatable by the crank, the crank assembly shaft being coupled to the driving shaft axially through a bearing opposed to the crank, the bearing allowing the crank assembly shaft and the driving shaft to rotate freely relative to each other, the actuator assembly including a collar 60 selectively movable so as to overlap jointly both the crank assembly shaft and driving shaft, the collar, crank assembly shaft and driving shaft being configured and sized so that with the collar overlapping the crank assembly shaft and driving shaft, the crank assembly shaft and driving shaft are jointly rotatable.

There may also be provided a covered vehicle container wherein the collar is further selectively movable so that the crank assembly shaft and driving shaft are rotatable independently from each other.

There may also be provided a covered vehicle container wherein the motor and the driving shaft are mounted to the bracket mobile portion, the actuator assembly further including a crank shaft provided adjacent one of the container first and second ends, the crank being mounted to the crank shaft so as to rotate the latter about a crank shaft rotation axis, and extension shaft being provided between the crank shaft and the driving shaft to transmit rotations of the crank shaft to the driving shaft to rotate the latter.

There may also be provided a covered vehicle container wherein the extension shaft is coupled to the driving and crank shafts with universal joints.

There may also be provided a covered vehicle container wherein the transmission assembly includes a first 90 degrees gearbox between the arm and the driving shaft and a second 90 degrees gearbox between the arm and the rod, the arm being coupled to the first 90 degrees gearbox using a universal joint to allow pivotal movement of the arm between the arm first and second positions as the rod moves between the rod first and second positions.

There may also be provided a covered vehicle container further comprising a support rod mounted to the tarpaulin so as to extend laterally thereacross at a location intermediate the tarpaulin first and second ends.

There may also be provided a covered vehicle container wherein the at least one tarpaulin support includes at least two arches spaced apart from each other and each extending across the container top aperture between the container first and second ends.

In yet another broad aspect of the present disclosure, there is provided a device for handling a tarpaulin over a container top aperture defining an aperture first end and an opposed aperture second end, the tarpaulin defining a tarpaulin first end and an opposed tarpaulin second end, the tarpaulin being secured to the container at the tarpaulin first end opposed to the aperture second end and movable between tarpaulin retracted and extended configurations in which the tarpaulin is respectively retracted from the container top aperture and extended across the container top aperture, the device comprising: a rod defining a rod longitudinal axis, the rod being movable between rod first and second positions wherein the rod is respectively adjacent the aperture first and second end, the tarpaulin being mountable to the rod at the tarpaulin second end to allow rolling of the tarpaulin thereonto and unrolling of the tarpaulin therefrom when the rod is rotated about the rod longitudinal axis; an actuator assembly, the actuator assembly including a motor, a crank, and a driving shaft defining a longitudinal driving shaft rotation axis, the actuator assembly being configurable between a motorized configuration and a manual configuration, wherein, in the motorized configuration, the motor is mechanically coupled to the driving shaft for selectively rotating the driving shaft about the driving shaft rotation axis when the motor is powered, and, in the manual configuration, the motor is uncoupled from the driving shaft and the crank is mechanically coupled to the driving shaft so that the crank is usable to selectively rotate the driving shaft independently of the motor; a transmission assembly between the actuator assembly and the rod, the transmission assembly being operatively coupled to the actuator assembly and to the rod for transmitting rotations of the driving shaft to the rod so that rotation of the driving shaft about the driving shaft rotation axis causes rotation of the rod about the rod longitudinal axis, the transmission assembly including an elongated arm defining an arm longitudinal axis, the arm defining opposed arm first and second ends, the arm first end being adjacent to the driving shaft and the arm second end being adjacent to the container top aperture, the arm being operatively coupled to the driving shaft and rod so that rotation of the driving shaft about the driving shaft rotation axis causes rotation of the arm about the arm longitudinal axis, which in turn causes rotation of the rod about the rod longitudinal axis, the arm extending perpendicular to the rod and being pivotable relative to the driving shaft between arm first and second positions, wherein the rod is respectively in the rod first and second positions; and a biasing element operatively coupled to the rod for biasing the rod towards the rod second position. Rotating the rod using the actuator assembly to roll the tarpaulin therearound moves the rod towards the rod first position to move the tarpaulin to the tarpaulin retracted configuration and rotating the rod using the actuator assembly to unroll the tarpaulin therefrom moves the rod towards the rod second position to move the tarpaulin to the tarpaulin extended configuration.

In yet another broad aspect of the present disclosure, there is provided an actuator assembly, the actuator assembly including a motor, a crank, and a driving shaft defining a longitudinal driving shaft rotation axis, the actuator assembly being configurable between a motorized configuration and a manual configuration, wherein, in the motorized configuration, the motor is mechanically coupled to the driving shaft for selectively rotating the driving shaft about the driving shaft rotation axis when the motor is powered, and, in the manual configuration, the motor is uncoupled from the driving shaft and the crank is mechanically coupled to the driving shaft so that the crank is usable to selectively rotate the driving shaft independently of the motor.

There may also be provided an actuator assembly wherein the actuator assembly includes an intermediate shaft mechanically coupled to the motor so as to be rotatable thereby, the intermediate shaft defining a shaft passageway extending longitudinally therethrough coaxially with the driving shaft rotation axis, the driving shaft extending in the shaft passageway and protruding therefrom, the actuator assembly further comprising a shaft coupling element movable between coupling and uncoupling configurations, wherein in the coupling configuration, the shaft coupling element couples the intermediate shaft and driving shaft to each other so that the motor and driving shafts are jointly rotatable about the driving shaft rotation axis, and in the uncoupling configuration, the driving shaft is rotatable about the driving shaft rotation axis independently from the intermediate shaft.

There may also be provided an actuator assembly wherein the intermediate shaft defines an intermediate shaft coupling portion and the driving shaft defines a driving shaft coupling portion, the shaft coupling element securing the intermediate and driving shaft coupling portions to each other in the coupling configuration.

There may also be provided an actuator assembly wherein the intermediate and driving shaft coupling portions are adjacent to each other.

There may also be provided an actuator assembly wherein the shaft coupling element includes a collar, the collar receiving thereinto and overlapping at least part of each of the intermediate and driving shaft coupling portions in the locking configurations.

There may also be provided an actuator assembly wherein the intermediate and driving shaft coupling portions each have a transversal cross-sectional configuration lacking continuous rotational symmetry.

There may also be provided an actuator assembly wherein the intermediate and driving shaft coupling portions each have a polygonal transversal cross-sectional configuration.

There may also be provided an actuator assembly wherein the shaft coupling element is selectively lockable in the coupling configuration.

There may also be provided an actuator assembly wherein the shaft coupling element also includes a locking pin, the driving shaft coupling portions defining a pin receiving aperture extending laterally therethrough, the collar defining a pair of collar apertures extending laterally therethrough laterally opposed to each other, wherein, in the coupling configuration, the collar apertures are in register with the pin receiving aperture and the locking pin is insertable through both the collar apertures and the pin receiving aperture to lock the shaft coupling element in the coupling configuration.

In yet another broad aspect of the present disclosure, the invention provides a device for handling a tarpaulin to cover at least part of a container using the tarpaulin, the container defining a container bottom wall, a container peripheral wall extending therefrom and a container top aperture delimited by a container top edge of the container peripheral wall opposed to the container bottom wall, the container top aperture defining an aperture first end and an opposed aperture second end, the tarpaulin defining a tarpaulin first end and an opposed tarpaulin second end, the tarpaulin being secured to the container at the tarpaulin first end opposed to the aperture second end and movable between tarpaulin retracted and extended configurations in which the tarpaulin is respectively retracted from the container top aperture and extended across the container top aperture, the device comprising: a rod defining a rod longitudinal axis, the rod being movable between rod first and second positions wherein the rod is respectively adjacent the aperture first and second ends, the tarpaulin being mountable to the rod at the tarpaulin second end to allow rolling of the tarpaulin thereonto and unrolling of the tarpaulin therefrom when the rod is rotated about the rod longitudinal axis; an actuator assembly, the actuator assembly including an actuator and a driving shaft rotatable about a longitudinal driving shaft rotation axis by the actuator; and a transmission assembly between the actuator assembly and the rod, the transmission assembly being operatively coupled to the actuator assembly and to the rod for transmitting rotations of the driving shaft to the rod so that rotation of the driving shaft about the driving shaft rotation axis by the actuator causes rotation of the rod about the rod longitudinal axis, the transmission assembly including an elongated arm defining an arm longitudinal axis, the arm defining opposed arm first and second ends, the arm first end being adjacent to the container bottom wall and the arm second end being adjacent to the container top aperture, the arm being operatively coupled to the driving shaft and rod so that rotation of the driving shaft about the driving shaft rotation axis by the actuator causes rotation of the arm about the arm longitudinal axis, which in turn causes rotation of the rod about the rod longitudinal axis, the arm extending perpendicular to the rod and being pivotable relative to the driving shaft between arm first and second positions, wherein the rod is respectively in the rod first and second positions. Wherein rotating the rod using the actuator assembly to roll the tarpaulin therearound moves the rod towards the rod first position to move the tarpaulin to the tarpaulin retracted configuration and rotating the rod using the actuator assembly to unroll the tarpaulin therefrom moves the rod towards the rod second position to move the tarpaulin to the tarpaulin extended configuration.

There may also be provided a device wherein the arm is a fixed length arm.

There may also be provided a device wherein the transmission assembly includes a first 90 degrees gearbox between the arm and the driving shaft and a second 90 degrees gearbox between the arm and the rod, the arm being coupled to the first 90 degrees gearbox using a universal joint to allow pivotal movement of the arm between the arm first and second positions as the rod moves between the rod first and second positions.

There may also be provided a device wherein the actuator assembly includes a crank operatively coupled to the driving shaft for rotating the driving shaft about the driving shaft rotation axis.

There may also be provided a device further comprising a mounting bracket secured to the actuator and transmission assemblies for mounting the actuator and transmission assemblies to the container, the mounting bracket being configured and sized for allowing vertical movements of the arm relative to the container peripheral wall.

There may also be provided a device wherein the mounting bracket includes a base fixedly mountable to the container and a bracket mobile portion movable vertically relative to the base, the arm being mechanically coupled to the bracket mobile portion at the arm first end so that the arm first end is vertically movable along with the bracket mobile portion.

There may also be provided a device wherein the transmission assembly includes a universal joint between the bracket mobile portion and the arm for allowing pivotal movements of the arm relative to the mounting bracket.

Advantageously, in some embodiments, the proposed device can be manufactured using a relatively small quantity of materials. When the electric motor is disengaged from the driving shaft, the crank can be used to operate the proposed device manually using the crank. The device can therefore be operated if the motor is not powered or if the motor fails. In some embodiments, change between the manual and motorized configurations is achieved using a relatively small number of ergonomic steps.

In some embodiments, the proposed device may automatically achieve the manual configuration from the motorized configuration when the crank is used, instead of requiring an action from the intended user.

Other objects, advantages and features of the present invention will become more apparent upon reading of the following non-restrictive description of some embodiments thereof, given by way of example only with reference to the accompanying drawings.

### BRIEF DESCRIPTION OF THE DRAWINGS

Figure 1, in a perspective view, illustrates a container and a device for handling a tarpaulin to cover at least part of a container using the tarpaulin in accordance with an embodiment of the present invention, the tarpaulin being shown in a configuration intermediate a retracted configuration and an extend configuration;
Figure 2, in a perspective view, illustrates the container and device of FIG. 1, the tarpaulin being shown in the retracted configuration;
Figure 3, in a perspective view, illustrates the container and device of FIGS. 1 and 2, the tarpaulin being shown in the extended configuration;
Figure 4, in a perspective view, illustrates an actuator assembly part of the device of FIGS. 1 to 3, the actuator assembly being shown in a motorized configuration;
Figure 5, in a perspective view, illustrates the actuator assembly of FIG. 4, the actuator assembly being shown in a manual configuration;
Figure 6, in a side elevation view, illustrates a mounting bracket part of the device of FIGS. 1 to 3, along with the actuator assembly of FIGS. 4 and 5 and part of a transmission assembly part of the device of FIGS. 1 to 3;
Figure 7, in a perspective view, illustrates the mounting bracket of FIG. 6;
Figure 8, in a partial perspective exploded view, illustrates the actuator assembly of FIGS. 4 and 5;
Figure 9, in a cross-sectional view along section line IX-IX of FIG. 7, illustrates the actuator assembly of FIGS. 4, 5 and 8 in the motorized configuration;
Figure 10, in a cross-sectional view along section line IX-IX of FIG. 7, illustrates the actuator assembly of FIGS. 4, 5, 8 and 9 in the manual configuration;
Figure 11, in a partial perspective view, illustrates a first embodiment of a biasing element usable in the device of FIGS. 1 to 3;
Figure 12, in a perspective view of bubble XII of FIG. 1, illustrates a second embodiment of a biasing element usable in the device of FIGS. 1 to 3;
Figure 13, in a perspective view of bubble XIII of FIG. 1, illustrates a third embodiment of a biasing element usable in the device of FIGS. 1 to 3;
Figure 14, in a perspective view of bubble XIV OF FIG. 1, illustrates an arch part of the container of FIGS. 1 to 3;
Figure 15, in a side cross-sectional view along section line XV-XV of FIG. XIV, illustrates the tarpaulin of FIGS. 1 to 3, a long with a support rod usable to support a middle portion of the tarpaulin when the letter is in a tarpaulin extended configuration;
Figure 16, in a perspective view, illustrates an alternative embodiment of an actuator assembly usable in the device of FIGS. 1 to 3, the actuator assembly being shown in a manual configuration;
Figure 17, in a perspective partially exploded view, illustrates the actuator assembly of FIG. 16;
Figure 18, in a partial side-cross-sectional view, illustrates the actuator assembly of FIGS. 16 and 17 in the motorized configuration;
Figure 19, in a perspective view, illustrates alternative embodiments of an actuator assembly and a transmission assembly usable in the device of FIGS. 1 to 3;
Figure 20, in a perspective view, illustrates an other alternative embodiment of an actuator assembly and a transmission assembly usable in the device of FIGS. 1 to 3;
Figure 21, in a perspective view, illustrates yet an other alternative embodiment of an actuator assembly and a transmission assembly usable in the device of FIGS. 1 to 3;
Figure 22, in a perspective view, illustrates the actuator assembly of FIG. 21;
Figure 23, in a cross-sectional view along section line XXIII-XXIII of FIG. 22, illustrates part of the actuator assembly of FIG. 21 in the motorized configuration;
Figure 24, in a cross-sectional view along section line XXIII-XXIII of FIG. 22, illustrates part of the actuator assembly of FIG. 22 in the manual configuration;
Figure 25, in a partial perspective view, illustrates yet an other alternative embodiment of an actuator assembly and a transmission assembly usable in the device of FIGS. 1 to 3 shown here with a crank extension shaft thereof in a retracted configuration; and
Figure 26, in a partial perspective view, the actuator assembly of FIG. 25 shown here with the crank extension shaft in an extended configuration;

### DETAILED DESCRIPTION

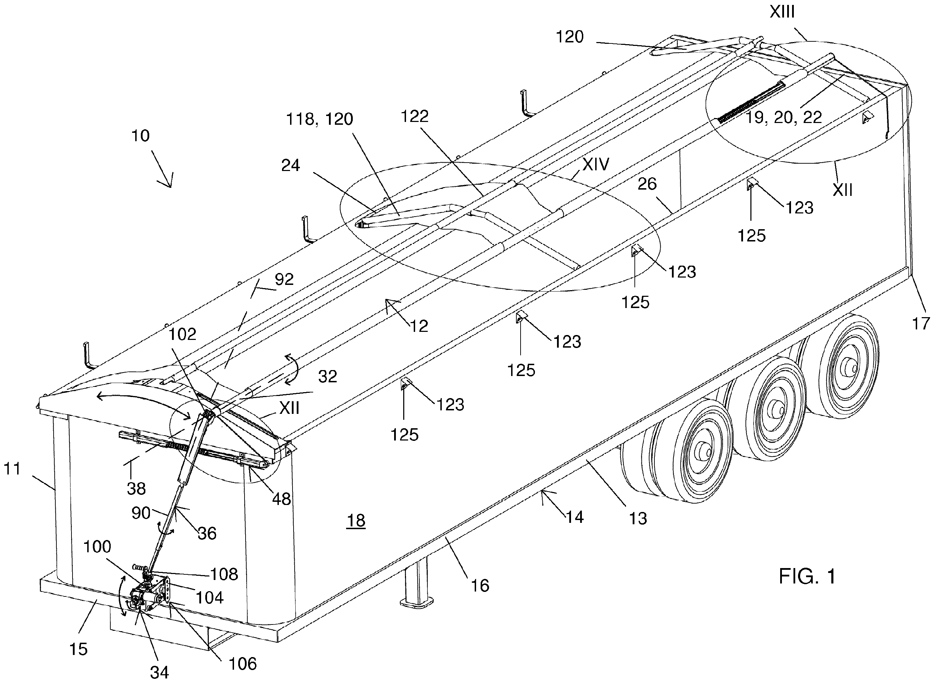

Referring to FIG. 1 for example, there is shown a device 10 for handling a tarpaulin 12 to cover at least part of a container 14 using the tarpaulin 12. Typically, the container 14 defines a container bottom wall 16, a container peripheral wall 18 extending therefrom and a container top aperture 20 delimited by a container top edge 19 of the container peripheral wall 18 substantially opposed to the container bottom wall 16. The present invention is however also usable to cover other structures that may lack the container bottom wall 16 or part of the container peripheral wall 18.

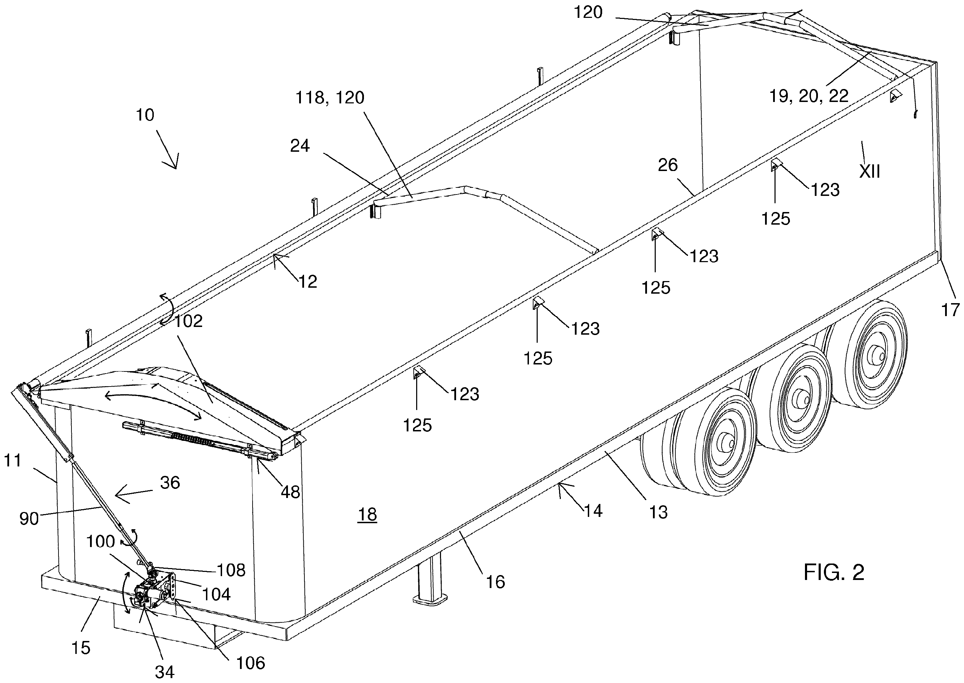

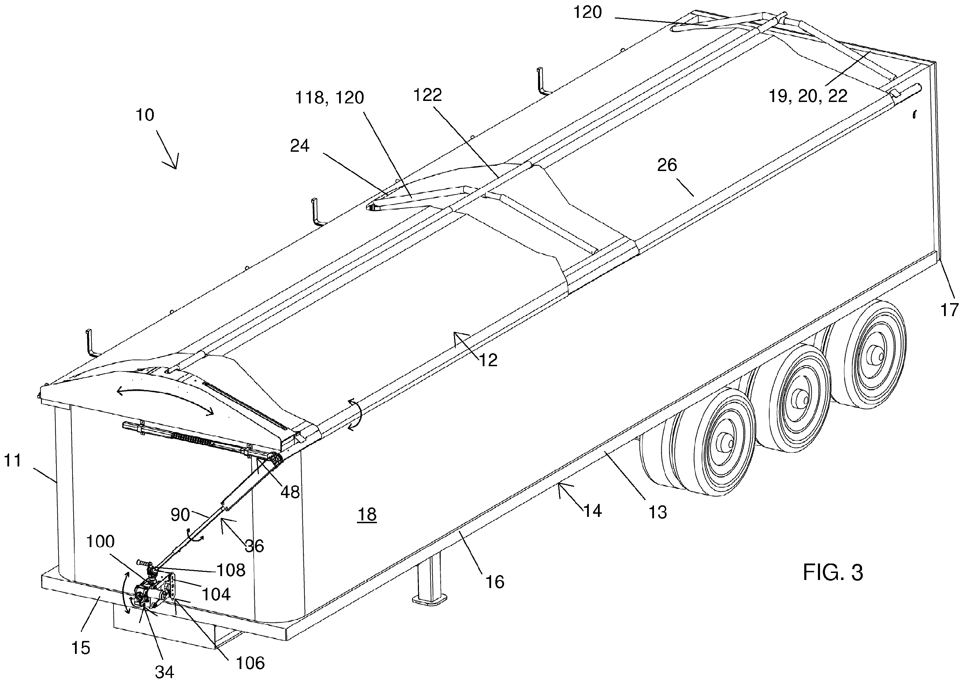

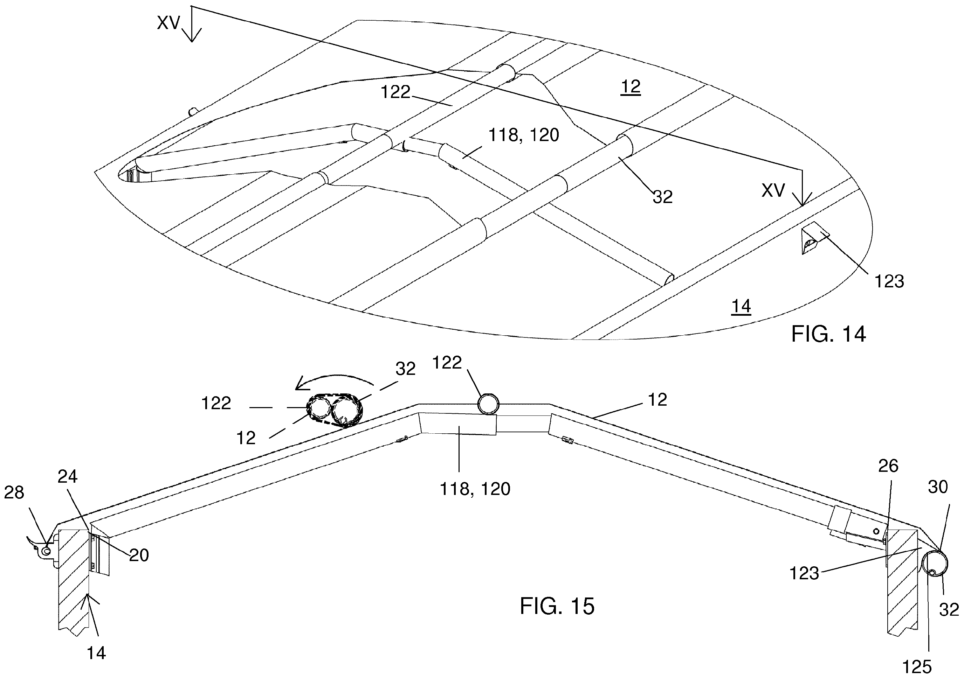

The container top aperture 20 defines an aperture first end 24 and a substantially opposed aperture second end 26. The tarpaulin 12 defines a tarpaulin first end 28 and a substantially opposed tarpaulin second end 30, as seen for example in FIG. 15. The tarpaulin 12 is secured to the container 14 at the tarpaulin first end 28 substantially opposed to the aperture second end 26 and is movable between tarpaulin retracted and extended configurations in which the tarpaulin 12 is respectively substantially retracted from the container top aperture and 20 extended across the container top aperture 20, as seen respectively in FIGS. 2 and 3.

Returning to FIG. 1, the container 14 defines opposed container first and second ends 11 and 13 and opposed container first and second sides 15 and 17 each extending between the container first and second ends 11 and 13. The aperture first and second ends 24 and 26 are provided respectively at the container first and second ends 11 and 13.

The container 14 is typically part of a vehicle or a trailer to be pulled by a vehicle. For example, the container 14 is mountable on a platform truck, an open top truck trailer or the bin of a dump truck, among other possibilities. However, the device 10 is usable with other suitable containers 14. In some embodiments, the device 10 is usable to cover a railroad car.

It should be noted that the aperture first and second ends 24 and 26 are not necessarily at the front or rear of the container 14, front and rear being related to the direction in which the container 14 is moved by the vehicle. As shown in the drawings, the aperture first and second ends 24 and 26 may be on edges of the container 14 that extend parallel to the direction of motion of the container 14 in typical operation. In the context of a movable container 14, FIGS. 1 to 3 illustrate a case in which the container 14 is moved in a direction perpendicular to a line joining the aperture first and second ends 24 and 26. The tarpaulin 12 is therefore retracted laterally relative to the direction of motion. However, it is within the scope of the invention to have tarpaulins 12 retractable along the direction of motion.

The term "substantially" is used throughout this document to indicate variations in the thus qualifies terms. These variations are variations that do not materially affect the manner in which the invention works and can be due, for example, to uncertainty in manufacturing processes or to small deviations from a nominal value that do not cause significant changes to the invention. These variations are to be interpreted from the point of view of the person skilled in the art. Also, directional terminology such as below and horizontal, among others, is used in this document and refer to the device 10 and container 14 in a typical operational configuration. This terminology is used for clarity reasons and should not be used to restrict the scope of the appended claims unless explicitly mentioned in the claims.

The tarpaulin 12 may be directly secured to the container 14, or may be secured thereto indirectly, for example through anchoring straps (not shown in the drawings) that extend between the tarpaulin 12, at the tarpaulin first end 28 for example, and the container 14. When present, the anchoring straps are secured to the container 14, for example to the container peripheral wall 18 below the aperture first end 24. The tarpaulin 12 is secured to the container 14 substantially opposed to the aperture second end 26 so that when extended, the tarpaulin 12 extends across the container top aperture 20. To that effect, the tarpaulin 12 may be secured to the container peripheral wall 18 below the aperture first end 24 or adjacent the aperture first end 24, among other possibilities.

The device 10 includes a rod 32, an actuator assembly 34 and a transmission assembly 36. The transmission assembly 36 is provided between the rod 32 and the actuator assembly 34 and transmits rotation produced in the actuator assembly 34 to the rod 32 so that the latter can be used to extend and withdraw the tarpaulin 12.

More specifically, the rod 32 defines a rod longitudinal axis 38. The rod 32 is movable between rod first and second positions, seen respectively in FIGS. 2 and 3, wherein the rod 32 is respectively substantially adjacent the aperture first and second ends 24 and 26. The tarpaulin 12 is mountable to the rod 32 at the tarpaulin second end 30 to allow rolling of the tarpaulin 12 thereonto and unrolling of the tarpaulin 12 therefrom when the rod 32 is rotated about the rod longitudinal axis 38. For example, the tarpaulin 12 is secured to the rod 32 at the tarpaulin second end 30 in a conventional manner.

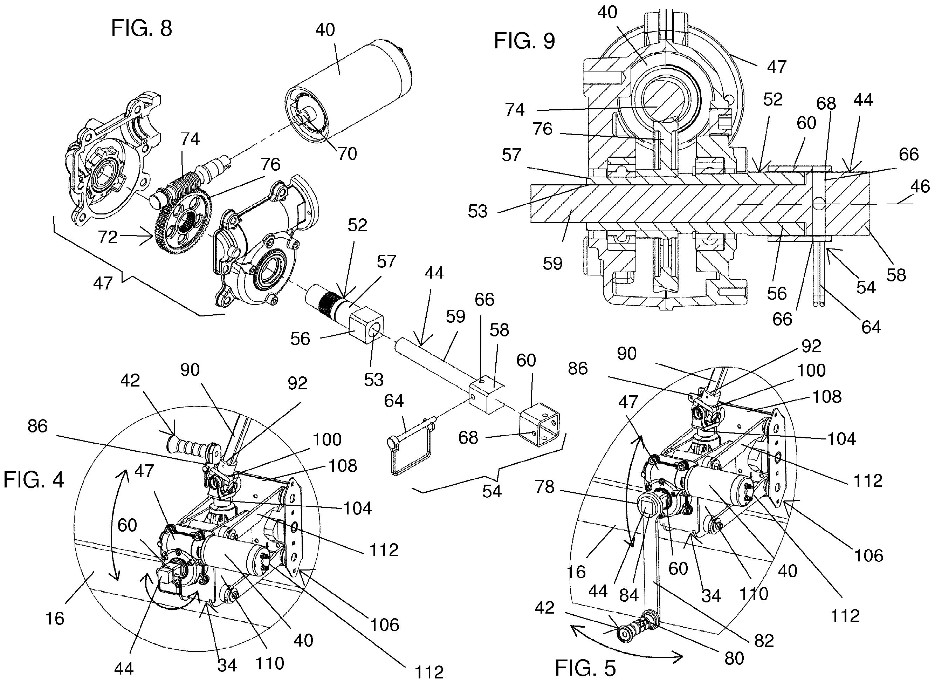

As seen for example in FIGS. 4 and 5, the actuator assembly 34 includes a motor 40, a crank 42, and a driving shaft 44 defining a substantially longitudinal driving shaft rotation axis 46. In some embodiments, but not necessarily, the actuator assembly 34 also includes an actuator body 47 to which the motor 40, crank 42, and driving shaft 44 are mounted. The actuator assembly 34 is configurable between a motorized configuration and a manual configuration, seen for example respectively in FIGS. 4 and 5. In the motorized configuration, the motor 40 is mechanically coupled to the driving shaft 44 for selectively rotating the driving shaft 44 about the driving shaft rotation axis 46 when the motor 40 is powered. In the manual configuration, the motor 40 is uncoupled from the driving shaft 44 and the crank 42 is mechanically coupled to the driving shaft 44 so that the crank 42 is usable to selectively rotate the driving shaft 44 independently of the motor 40. More details regarding the structure and operation of the actuator assembly 34 are provided hereinbelow.

The motor 40 is any suitable motor, such as for example and non-limitingly an electrical motor, an hydraulic motor or a pneumatic motor connected to a suitable power supply and to a controller (both not shown in the drawings) in a conventional manner. The controller allows to selectively cause the motor 40 to turn in a selected direction by suitably powering the motor 40, and to selectively remove power to the motor 40.

The transmission assembly 36 is provided between the actuator assembly 34 and the rod 32. The transmission assembly 36 is operatively coupled to the actuator assembly 34 and to the rod 32 for transmitting rotations of the driving shaft 44 to the rod 32 so that rotation of the driving shaft 44 about the driving shaft rotation axis 46 causes rotation of the rod 32 about the rod longitudinal axis 38. More details regarding the structure and operation of the transmission assembly 36 are provided hereinbelow.

Rotating the rod 32 using the actuator assembly 34 to roll the tarpaulin 12 therearound moves the rod 32 towards the rod first position to move the tarpaulin 12 to the tarpaulin retracted configuration. Rotating the rod 32 using the actuator assembly 34 to unroll the tarpaulin 12 therefrom moves the rod 32 towards the rod second position to move the tarpaulin 12 to the tarpaulin extended configuration. By selecting the manual or motorized configuration of the actuator assembly 34, the device 10 can be operated respectively manually, without an external power source, and motorized, by energizing the motor 40 with a suitable power source.

Returning to FIG. 1, typically, at least one biasing element 48 is operatively coupled to the rod 32 for biasing the rod 32 towards the rod second position. Indeed, in a typical embodiment, the tarpaulin 12 is not rigid enough to push the rod 32 towards the rod second position when the tarpaulin 12 is unrolled from the rod 32. Therefore, this movement must be caused separately, for example using the biasing element 48. However, in alternative embodiments, this movement may be provided in any other suitable manner, for example passively if the tarpaulin is rigid enough, or under the action of gravity if the top aperture peripheral edge 22 is slanted. In yet other embodiments, a motor may be used to move the rod 32 towards the rod second position. Movements of the rod 32 towards the rod first position are usually automatically achieved are rolling the tarpaulin 12 around the rod 32 reduces a distance between the rod and the aperture first end 24.

Referring to FIGS. 8, 9 and 10, an exemplary embodiment of the actuator assembly 34 is now described in greater details. The reader skilled in the art will appreciate that different actuator assemblies are within the scope of the appended claims. Non-limiting examples of alternative actuator assemblies are described hereinbelow.

In the actuator assembly 34, the motor 40 is not directly coupled to the driving shaft 44. Instead, the actuator assembly 34 includes an intermediate shaft 52 mechanically coupled to the motor 40 so as to be rotatable thereby and a shaft coupling element 54. The intermediate shaft 52 defines a shaft passageway 53 extending longitudinally therethrough coaxially with the driving shaft rotation axis 46. The driving shaft 44 extends in the shaft passageway 53 and protrudes therefrom. In the actuator assembly 34, the driving shaft 44 protrudes at both ends from the shaft passageway 53. However, in other embodiments the driving shaft 44 may protrude only at one end thereof from the shaft passageway 53.

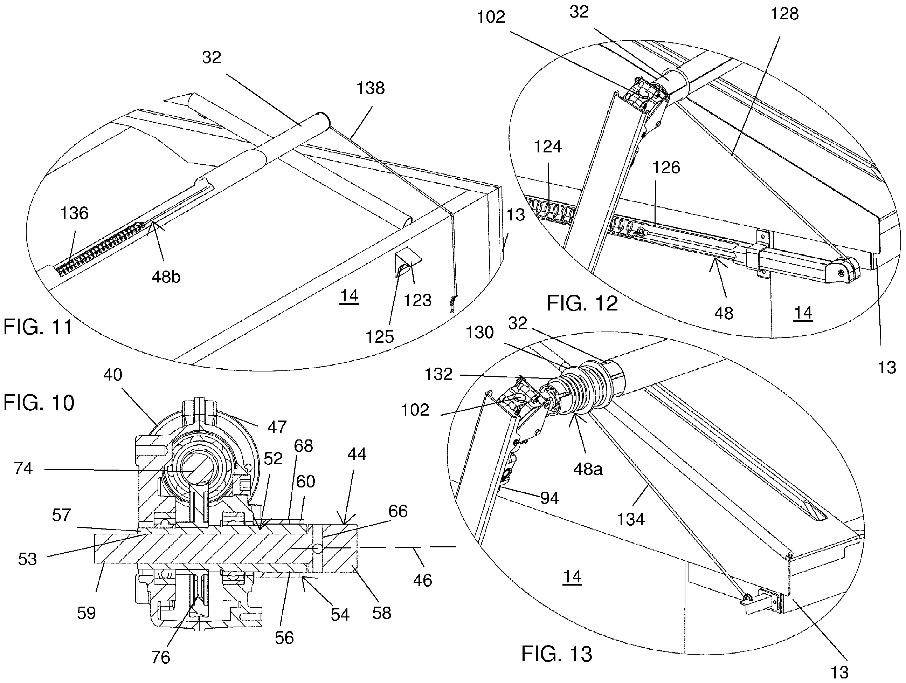

The shaft coupling element 54 is movable between coupling and uncoupling configurations, seen respectively in FIGS. 9 and 10. In the coupling configuration, the shaft coupling element 54 couples the intermediate shaft 52 and driving shaft 44 to each other so that the motor 40 and driving shafts 44 are jointly rotatable about the driving shaft rotation axis 46. In the uncoupling configuration, the driving shaft 44 is rotatable about the driving shaft rotation axis 46 independently from the intermediate shaft 52, and therefore independently from the motor 40.

The shaft coupling element 54 may take any suitable form. The shaft coupling element 54 takes the form of an element that may selectively couple the driving and intermediate shafts 44 and 52 to each other so that the intermediate shafts 44 and 52 are jointly rotatable.

For example, and non-limitingly, intermediate shaft 52 defines an intermediate shaft coupling portion 56 and the driving shaft 44 defines a driving shaft coupling portion 58. The shaft coupling element 54 secures the intermediate and driving shaft coupling portions 56 and 58 to each other in the coupling configuration. In the uncoupling configuration, the intermediate and driving shaft coupling portions 56 and 58 are free to rotate relative to each other. Typically, the intermediate and driving shaft coupling portions 56 and 58 are substantially adjacent to each other.

For example, the intermediate shaft 52 includes a substantially cylindrical intermediate shaft main portion 57 and the intermediate shaft coupling portion 56 extends integrally from the intermediate shaft main portion 57 at one end thereof so that the intermediate shaft main portion 57 and intermediate shaft coupling portion 56 are jointly rotatable. Similarly, the driving shaft 44 includes a substantially cylindrical driving shaft main portion 59 and the driving shaft coupling portion 58 extends integrally from the driving shaft main portion 59 at one end thereof so that the driving shaft main portion 59 and driving shaft coupling portion 58 are jointly rotatable. The driving shaft main portion 59 extends through the intermediate shaft coupling and main portions 56 and 57 and the driving shaft coupling portion 58 protrudes from the intermediate shaft 52.

In a specific embodiment, the shaft coupling element 54 includes a collar 60. The collar 60 receives thereinto and overlaps at least part of each of the intermediate and driving shaft coupling portions 56 and 58 in the coupling configuration. In the uncoupling configuration, the collar 60 is completely removed from the intermediate and driving shaft coupling portions 56 and 58, or overlaps only one of the intermediate and driving shaft coupling portions 56 and 58.

The collar 60 may be coupled to the intermediate and driving shaft coupling portions 56 and 58 in any suitable manner in the coupling configuration to ensure that the intermediate and driving shaft coupling portions 56 and 58 are jointly rotatable. For example, the intermediate and driving shaft coupling portions 56 and 58 each have a transversal cross-sectional configuration lacking continuous rotational symmetry, such as, for example and non-limitingly, a substantially polygonal transversal cross-sectional configuration. In other words, the intermediate and driving shaft coupling portions 56 and 58 each have a transversal cross-sectional configuration that differs from a circle. The collar 60 is hollow and substantially fittingly receives the intermediate and driving shaft coupling portions 56 and 58 so that in the coupling configuration, the collar 60 is jointly rotatable about the driving shaft rotation axis 46 along with the intermediate and driving shafts 52 and 44.

In some embodiments, the shaft coupling element 54 is selectively lockable in the coupling configuration. However, in other embodiments, this is not the case. More specifically, for example, the shaft coupling element 54 also includes a locking pin 64. At least one of the intermediate and driving shaft coupling portions 56 and 58, the driving shaft coupling portion 58 in the embodiment shown in the drawings, defines a pin receiving aperture 66 extending laterally therethrough and the collar 60 defines a pair of collar apertures 68 extending laterally therethrough laterally opposed to each other. In the coupling configuration, the collar apertures 68 are in register with the pin receiving aperture 66 and the locking pin 64 is insertable through both the collar apertures 68 and the pin receiving aperture 66 to lock the shaft coupling element 54 in the coupling configuration. Removing the locking pin 64 from the the collar apertures 68 and the pin receiving aperture 66 then allows to slide the collar 60 relative to the intermediate and driving shaft coupling portions 56 and 58 to achieve the uncoupling configuration.

The motor 40 is coupled to the intermediate shaft 52 in any suitable manner. For example, referring to FIG. 8, the motor 40 includes a motor output shaft 70 and a worm gear 72 extends between the motor output shaft 70 and the intermediate shaft 52 coupling the motor 40 and the intermediate shaft 52 to each other so that the motor 40 can rotate the intermediate shaft 52. The worm gear 72 includes a worm 74 driven by the motor output shaft 70 and a worm wheel 76 extending radially outwardly from the intermediate shaft 52 and jointly rotatable therewith. The worm 74 engages the worm wheel 76. Typically, but not exclusively, the worm wheel 76 is permanently engaged with the worm 74 during normal operation of the device 10, whether the actuator assembly 34 is in the motorized or manual configurations.

The actuator body 47 is configured to securely mount thereto the motor 40, worm gear 72, intermediate shaft 52 and driving shaft 44. The actuator body 47 is mounted to the container 14 in any suitable manner. An example of such a suitable manner is further described hereinbelow.

In the manual configuration, the crank 42 is secured to the driving shaft 44, as seen in FIG. 5. In some embodiments, not shown in the drawings, the crank 42 is permanently secured to the driving shaft 44. However, in other embodiments, as illustrated in the drawings, the crank 42 is removably mountable to the remainder of the actuator assembly 34.

For example, the crank 42 includes a crank attachment portion 78, a crank handle 80 and a crank spacing portion 82 extending therebetween. The crank attachment portion 78 is mountable to a protruding portion of the driving shaft 44 that protrudes from the intermediate shaft 52 opposite to the transmission assembly 36. For example, the crank attachment portion 78 is removably mountable to the driving shaft coupling portion 58 when the collar 60 is withdrawn therefrom. To that effect, the crank attachment portion 78 defines a crank aperture 84 substantially snugly receiving the driving shaft coupling portion 58. When the crank 42 is mounted to the driving shaft coupling portion 58, the crank handle 80 is offset from the driving shaft rotation axis 46 and can be rotated about the driving shaft rotation axis 46 to turn the driving shaft 44 thereabout.

In some embodiments, The device 10 defines a crank receiving element 86, for example a collar opening substantially vertically, for receiving the crank 42 thereinto when the crank 42 is detached from the driving shaft 44. The crank receiving element is configured to that the crank attachment portion 78 and crank spacing portion 82 can be received therethrough, but so as to prevent the crank handle 80 from passing therethrough. Therefore, the crank 42 can be safely stowed when not in use.

The transmission assembly 36 transmits the rotation of the driving shaft 44 to the rod 32. In some embodiments, the actuator assembly 34 is provided close to the container bottom wall 16 so as to be relatively easily operable in the manual configuration. The transmission assembly 36 must therefore transmit this rotation of the driving shaft 44 up to the rod 32, which is provided adjacent the container top aperture 20.

In some embodiments, the transmission assembly 36 is configured and sized so that a distance between the driving shaft 44 and the rod 32 remains substantially constant as the rod 32 moves between the rod first and second positions. This may require in some embodiments that the actuator assembly 34 be mounted so as to be movable relative to the container 10.

More specifically, with reference to FIG. 1, in a specific embodiment, the transmission assembly includes an elongated arm 90 defining an arm longitudinal axis 92. The arm 90 defines substantially opposed arm first and second ends 94 and 96, seen for example respectively in FIGS. 4 and 13. As better seen in FIG. 4, The arm first end 94 is substantially adjacent to the driving shaft 44. As better seen in FIG. 13, the arm second end 96 is substantially adjacent to the rod 32. Returning to FIG. 1, the arm 90 is operatively coupled to the driving shaft 44 and rod 32 so that rotation of the driving shaft 44 about the driving shaft rotation axis (not shown in FIG. 1) causes rotation of the arm 90 about the arm longitudinal axis 92, which in turn causes rotation of the rod 32 about the rod longitudinal axis 38. The arm 90 extends substantially perpendicular to the rod 32 and is pivotable relative to the driving shaft 44 between arm first and second positions, shown respectively in FIGS. 2 and 3, wherein the rod 32 is respectively in the rod first and second positions.

In some embodiments, as shown in the drawings, the arm 90 is a fixed length arm so that a distance between the driving shaft 44 and the rod 32 is fixed. However, in other embodiments, the arm 90 may be a telescopic arm having a variable length. In such embodiments, the actuator assembly 34 may be fixed relative to the container 14.

The transmission assembly 36 also includes gearboxes and other components that allow pivotal movements of the arm 90 and allow transmission of the rotation of the driving shaft 44 to the rod 32. For example, the driving shaft 44 is substantially horizontal and the transmission assembly includes a first 90 degrees gearbox 100 between the arm 90 and the driving shaft 44 and a second 90 degrees gearbox 102 between the arm 90 and the rod 32. The arm 32 is coupled to the first 90 degrees gearbox 100 using a universal joint 104 to allow pivotal movement of the arm 90 between the arm first and second positions as the rod 32 moves between the rod first and second positions.

In some embodiments, the path of the rod 32 between the rod first and second positions differs from an arc segment centered on the universal joint 104 with a radius of curvature equal to the length of the arm 90. Therefore, the arm 90 needs to be telescopic, or the location about which the arm 90 pivots needs to move relative to the container 14. This last option is illustrated in the drawings.

More specifically, the device 10 includes a mounting bracket 106 secured to the transmission assembly 34 for mounting the transmission assembly 36 to the container peripheral wall 18. The mounting bracket 106 is configured and sized for allowing vertical movements the arm 90 relative to the container peripheral wall 18. This is achieved by suitably mounting part of the transmission assembly 36 thereto. In some embodiments, the actuator assembly 34 is also mounted to the mounting bracket 106.

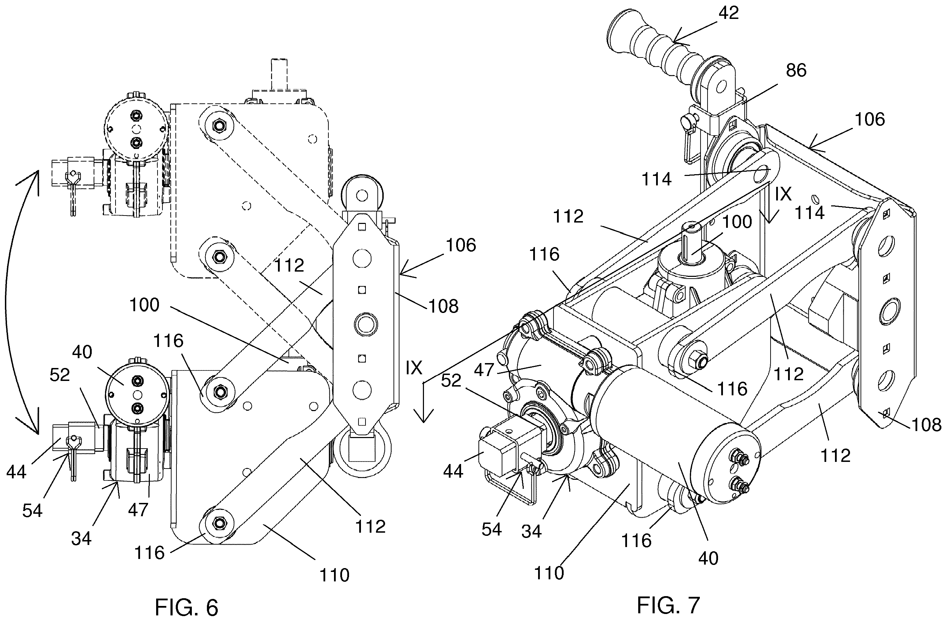

Referring for example to FIG. 7, the mounting bracket 106 includes a base 108 fixedly secured to the container peripheral wall 18 (not shown in FIG. 7, and a bracket mobile portion 110 movable vertically relative to the container 14. The arm 90 is mechanically coupled to the bracket mobile portion 110 at the arm first end 94 so that the arm first end 94 is vertically movable along with the bracket mobile portion 110, for example through the first 90 degrees gearbox 100.

The mounting bracket 106 also includes a pair of levers 112 extending substantially parallel to each other and vertically spaced apart from each other. In some embodiments of the invention, two pairs of levers 112 are provided. The two pairs of levers 112 are substantially parallel to each other and spaced apart from each other in a direction leading between the container first and second ends 11 and 13 . Each lever 112 is pivotally mounted at one end 114 thereof to the base 108 and pivotally mounted at another end 116 thereof to the bracket mobile portion 110.

The bracket mobile portion 110 takes for example the form of a frame to which other components may be secured. For example, the actuator assembly 34 is mounted to the bracket mobile portion 110, along with part of the transmission assembly 36. More generally, one of the actuator and transmission assemblies 34 and 36 is mounted to the bracket mobile portion 110. In the embodiment illustrates in FIGS. 6 and 7, the first 90 degrees gearbox 100 is mounted to the bracket mobile portion so as to be rotated by the actuator assembly 34.

As seen in FIG. 1, the base 108 is mounted to the container 14 on the container first side 15, for example substantially adjacent the container bottom wall 16 and substantially midway between the container first and second ends 11 and 13.

Any suitable container 14 may be used with the device 10. The tarpaulin 12 is supported by the container 14 when moving between the tarpaulin first and second positions. To that effect, the container 14 defines at least one tarpaulin support 118 extending between the container first and second ends 11 and 13 across the container top aperture 20. For example, the at least one tarpaulin support includes at least two arches 120 spaced apart from each other and each extending across the container top aperture 20 between the container first and second ends 11 and 13. In a specific non-limiting embodiment of the invention, three arches 120 are provided, one adjacent each of the container first and second sides 15 and 17, and a third one midway between the first two ones. However, any other suitable number of arches 120 is usable. Each arch 120 includes for example three rectilinear tubes joined sequentially to each other. In other embodiments (not shown in the drawings, the at least one tarpaulin support includes part of the top aperture peripheral edge 22 on which the rod 32 and/or tarpaulin 12 are supported.

In some embodiments, a support rod 122 is mounted to the tarpaulin 12 at a location intermediate the tarpaulin first and second ends 28 and 30. For example the support rod 122 is provided so that when the tarpaulin 12 is in the extended configuration, the support rod 122 is midway between the aperture first and second ends 24 and 26 and extends along substantially the distance between the container first and second sides 15 and 17. As seen in FIG. 15, the support rod 122 is rolled around the rod 32 along with the tarpaulin 12 when the latter is sufficiently rolled around the rod 32.

Also, in some embodiments, anchoring blocks 123 are provided. The device 10 may include a plurality of anchoring blocks 123 spaced apart from each other along the container top aperture 20 substantially adjacent the aperture second end 26. The anchoring blocks 123 are provided slightly below the aperture second end 26 and each define a recess 125, for example an inverted J-shaped recess 125. The recess 125 opens generally towards a plane containing the container bottom wall 16 when the anchoring blocks 123 are operatively mounted to the container 14 and the recess 125 is configured and sized for receiving the rod 32 thereinto when arm 90 is in the arm second position.

FIGS. 11 to 13 illustrate respectively various biasing element 48b, 48 and 48a usable in the device 10. The device 10 typically includes two of these biasing elements 48, 48a and 48b, one provided at each end of the rod 32, but use of one or more than two biasing elements 48, 48a and 48b is within scope of the invention. When more than one biasing element 48, 48a and 48b are used, all the biasing elements 48, 48a and 48b may be of the same type, or various types may be mixed in the same device 10. All the types of biasing elements 48, 48a and 48b are provided to pull the rod 32 towards the rod second position.

Referring to FIG. 12, there is shown the biasing element 48. The biasing element 48 includes a coil spring 124 mounted in a tubular body 126 fixed to the container 14. One end of the coil spring 124 is fixed relative tubular body 126 (not shown in the drawings), and a cable 128 extends from the other end of the coil spring 124. The cable 128 is rolled around the rod 32 so that it unrolls therefrom when the rod 32 is moved towards the rod first position and is rolled therearound when the rod 32 is moved towards the rod second position. A tension is present in the coil spring 124 so that the cable 128 pulls on the rod 32 towards the rod second position.

Referring to FIG. 13, there is shown the biasing element 48a. The biasing element 48a includes a pulley 130 mounted rod 32 so as to be rotatable relative thereto. A torsion spring 132 extends between the pulley 130 and the rod 32. A cable 134 is rolled around the pulley 130 at one end thereof and is secured to the container 14 at the container second end 13 at the other end thereof. The torsion spring 132 is configured to exert a torque pulling on the cable 134 so that the cable 134 has a tendency to be rolled around the pulley 130, which biases the rod 32 towards the rod second position.

Referring to FIG. 11, there is shown the biasing element 48b. The biasing element 48b includes a coil spring 136 mounted in the rod 32, which is hollow along at least part thereof. One end of the coil spring 136 is fixed longitudinally relative rod 32 (not shown in the drawings), and a cable 138 extends from the other end of the coil spring 136. The cable 138 protrudes from the rod 32 and is fixed to the container 14 at the container second end 13. A tension is present in the coil spring 136 so that the cable 138 pulls on the rod 32 towards the rod second position.

Biasing elements similar to the biasing elements 48, 48a and 48b, and usable in the device 10 are further described in US Patents 6,595,594 issued July 22, 2003 and 7,506,912 issued March 24, 2009, both issued to Royer, and US Patent Application Publication 20020021018 of Royer published February 21, 2002.

In operation, the device 10 works as follows. Taking for example as an initial configuration the configuration shown in FIG. 2 with the actuator assembly 34 in the motorized configuration, the arm 90 is in the arm first position. The rod 32 is thus in the rod first position with the tarpaulin 12 rolled therearound. The biasing element 48 biases the rod 32 towards the rod second position. However, the structure of the motor 40 and of the components linking the motor 40 to the rod 32 prevents the rod 32 from moving. It should be noted that in alternative embodiments other components, such as a lock, a clutch or a brake, prevent this movement instead.

When the motor 40 is rotated in a suitable direction, the intermediate shaft 52 is rotated through the worm gear 72. Since the shaft coupling element 54 is in the coupling configuration, the driving shaft 44 is then also rotated by the action of the motor 40, which turns the various elements of the transmission assembly 36 to rotate the rod 32 so that the tarpaulin 12 is released from the rod 32. The rod 32 is then free to move under the action of the biasing element 48 until the extended configuration is achieved. The bracket mobile portion 110 moves up and down due to the pivotal movement of the levers 112 as the tarpaulin moves between the tarpaulin retracted and extended configurations to endure that the rod 32 is always supported by the container 14. Retraction of the tarpaulin 12 is achieved by rotating the motor 40 in the opposite direction.

If for any reason the motor 40 cannot be used to operate the device 10, the actuator assembly 34 is moved to the manual configuration by sliding the collar 60 so that the driving shaft 44 is free to rotate relative to the intermediate shaft 52. Then, the crank 42 is mounted to the driving shaft 44 and can be used to rotate the rod 32 in either direction.

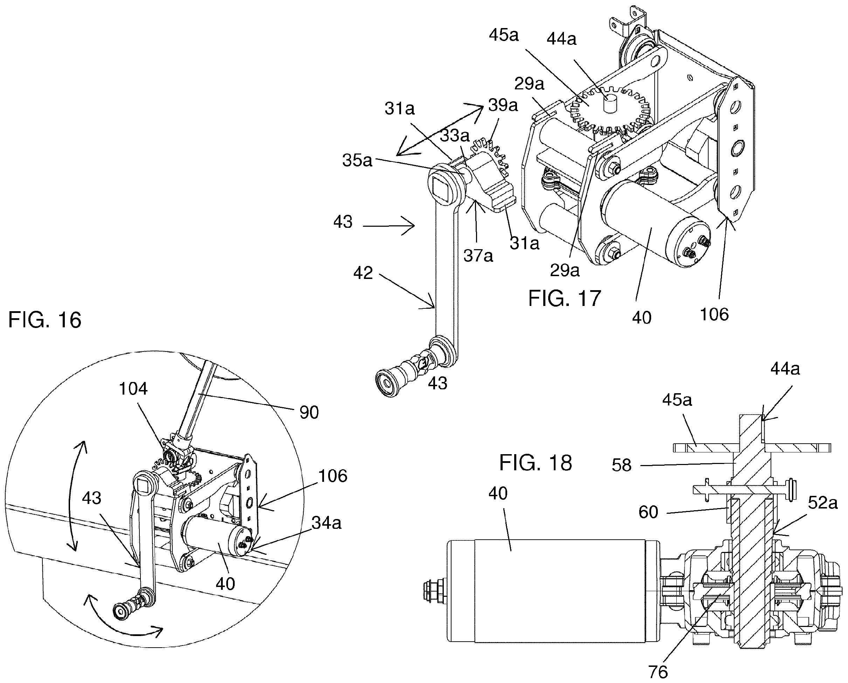

FIGS. 16 to 18 illustrate an alternative actuator assembly 34a similar to the actuator assembly 34. The actuator assembly 34a is similar in structure and function to the actuator assembly 34 except that the driving shaft 44a is vertical and only needs to protrude from the intermediate shaft 52a at one end thereof. Since the driving shaft 44a is vertical, the first 90 degrees gearbox 100 can be omitted and the driving shaft 44a can be directly coupled to the universal joint 104.

As seen for example in FIG. 18, the driving shaft 44a is provided with a driving shaft gear 45a extending circumferentially therearound outside of the intermediate shaft 52, for example further away from the intermediate shaft coupling portion 56 than the driving shaft coupling portion 58. Referring to FIG. 17, the crank 42 is part of a crank assembly 43a including a crank gear 39a and a crank assembly body 37a. The crank 42 is operatively coupled to the crank gear 39a for selectively rotating the crank gear 39a relative to the crank assembly body 37a. The crank assembly body 37a is mountable to a remainder of the actuator assembly 34a so that the crank 42 and driving shaft gears 45a are engaged with each other, for example perpendicular to each other, so that rotating the crank 42 is may rotate the driving shaft 44a.

For example, the crank assembly 43a includes a crank assembly shaft 35a rotatably mounted in a suitably located and configured mounting aperture 33a extending through the crank assembly body 37a. The crank assembly shaft 35a protrudes at both ends thereof from the crank assembly body 37a. The crank 42 and crank gear 39a are mounted at respective ends of the crank assembly shaft 35a so that the crank 42, crank assembly shaft 35a and crank gear 39a are jointly rotatable.

The crank assembly body 37a is typically removably mountable to the remainder of the actuator assembly 34a so that when operatively mounted thereto, the crank gear 39a engages the driving shaft gear 45a so that rotating the crank gear 39a rotates the driving shaft gear 45a. For example, the crank assembly body 37a defines a pair of opposed tongues 31a each slidably receivable in a respective substantially horizontal slit 29a when the crank assembly 44a is operatively mounted to the remainder of the actuator assembly 34a. When the collar 60 is slid so that the driving shaft 44a and intermediate shaft 52a are uncoupled from each other, the crank 42 can be rotated to rotate the driving shaft 44a, as in the embodiment of the actuator assembly 34 described hereinabove.

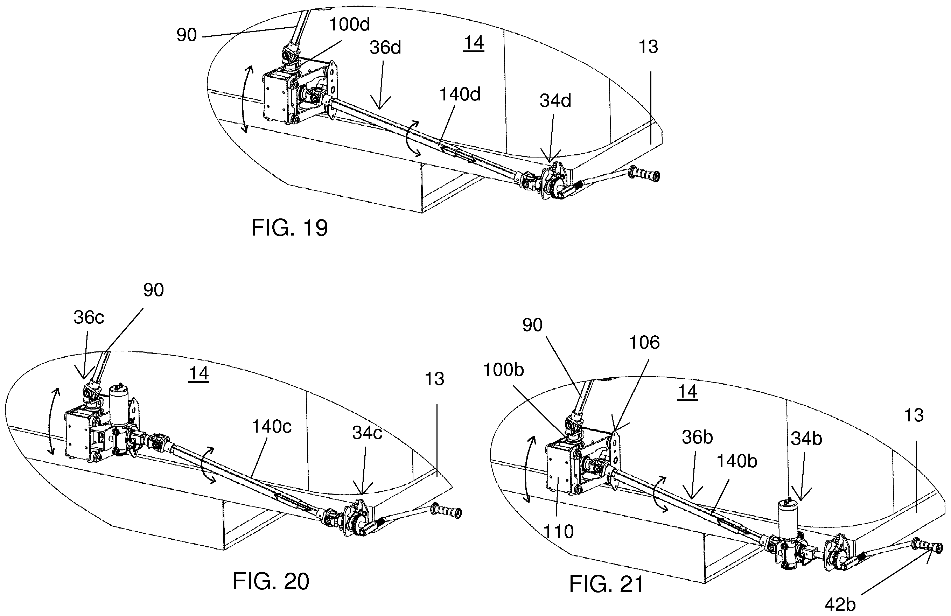

FIGS. 21 to 24 illustrate an alternative actuator assembly 34b and an alternative transmission assembly 36b. Referring to FIG. 21, instead of being located substantially midway between the container first and second ends 11 and 13, the actuator assembly 34b is provided at one of the container first and second ends 11 and 13, to facilitate access to the crank 42b by an intended user. More specifically, instead of being mounted directly to the mounting bracket 106, the actuator assembly 34b is mounted to the container 14 substantially adjacent to one of the container first and second ends 11 and 13 (the container second end 13 in the specific example illustrated in the drawings).

The transmission assembly 36b includes an intermediate gearbox 100b, replacing the first 90 degrees gearbox 100 and an extension shaft 140b. The extension shaft 140b extends between the driving shaft 44b and the intermediate gearbox 100b. The intermediate gearbox 100b is mounted to the bracket mobile portion 110, and the arm 90 is mounted to the intermediate gearbox 100b similarly to the manner in which the arm 90 is mounted to the first 90 degrees gearbox 100. The intermediate gearbox 100b is for example a 90 degrees gearbox. The actuator assembly 34b, extension shaft 140b, intermediate gearbox 100b and arm 90 are mechanically coupled to each other so that rotation of the driving shaft 44b about the driving shaft rotation axis 46 causes rotation of the arm 90 about the arm longitudinal axis 92. The extension shaft 140b is telescopic and is coupled to the driving shaft 44a and intermediate gearbox 100b with universal joints to accommodate vertical movements of the bracket mobile portion 110.

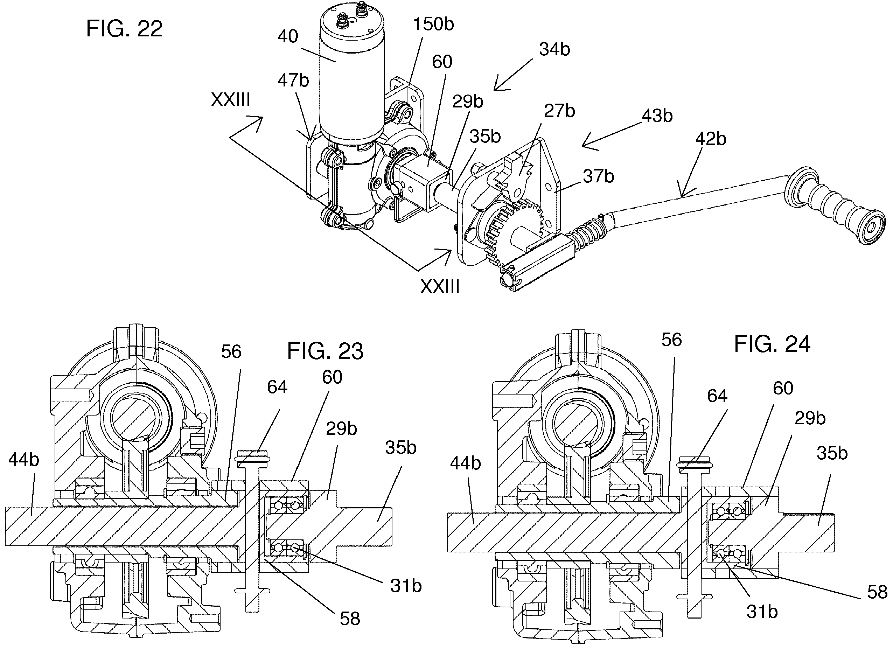

FIG. 22 better illustrate the actuator assembly 34b. The actuator body 47b is provided with an actuator body mounting bracket 150b securable to the container 14 (not shown in FIG. 22). The crank 42b is part of a crank assembly 43b including a crank assembly shaft 35b rotatably mounted in a suitably located and configured mounting aperture (not shown in the drawings) extending through a crank assembly body 37b mountable to the container 14. In some embodiments, the crank assembly shaft 35b may be mounted to the crank assembly body 37b using a bearing to facilitate its rotation. In alternative embodiments, the actuator assembly 34b has any other suitable configuration and is mounted to the container 14 in any other suitable manner.

The crank assembly shaft 35b protrudes at both ends thereof from the crank assembly body 37b. The crank assembly shaft 35b may extend integrally from the driving shaft 44b, or, as shown in FIGS. 23 and 24, may be coupled thereto axially through a bearing 31b opposed to the crank 42b (not shown in FIGS. 23 and 24). The bearing 31b allows the crank assembly shaft 35b and the driving shaft 44b to rotate freely relative to each other. To achieve the manual configuration, the collar 60 is moved to overlap a crank shaft coupling portion 29b similar in cross-section to the driving shaft coupling portion 58, thereby allowing locked joint rotation of the crank assembly shaft 35b and driving shaft 44b. Motorized and manual configurations are illustrated in FIGS. 23 and 24 respectively.

When the bearing 31b is used, the crank 42 may be permanently left secured to the crank assembly shaft 35b as in motorized operation, the collar 60 is withdrawn from the crank shaft coupling portion 29b and rotation of the driving shaft 44b does not cause rotation of the crank assembly shaft 35b.

In some embodiments, as seen in FIG. 21, the crank assembly 43b is provided with a conventional ratchet type mechanism 27b. The ratchet type mechanism 27b is configurable to prevent rotation of the crank 42b in an undesired direction, while allowing rotation of the crank 42b in the opposite direction.

FIG. 20 illustrates yet another actuator and transmission assemblies 34c and 36c configuration. The actuator and transmission assemblies 34c and 36c are similar to the actuator and transmission assemblies 34b and 36b except that the extension shaft 140c is provided between the driving shaft 44c and the crank assembly shaft 35b, and is therefore part of the actuator assembly 34c instead of being part of the transmission assembly 36c. The driving shaft 44c is therefore directly attached to the intermediate gearbox 100c. Otherwise, the actuator and transmission assemblies 34c and 36c and the actuator and transmission assemblies 34b and 36b operate similarly and have similar structures.

It should be noted that in some embodiments, the motor 40, worm gear 72 and intermediate shaft 52 are omitted and that in these embodiments, the actuator assembly 34, 34a or 34b is completely manually operated. In some of these embodiments, embodiments, the actuator assembly may be similar to the actuator assembly 34, except for the absence of the components required for motorized operation. In other such embodiments, the actuator assembly 34d and transmission assembly 36d may be as illustrated in FIG. 19, which is similar to the actuator assembly 34c and transmission assembly 36c, except that the the motor 40, worm gear 72 and intermediate shaft 52 are omitted. The extension shaft 104d is therefore coupled to the intermediate gearbox 100d for joint rotation therewith.

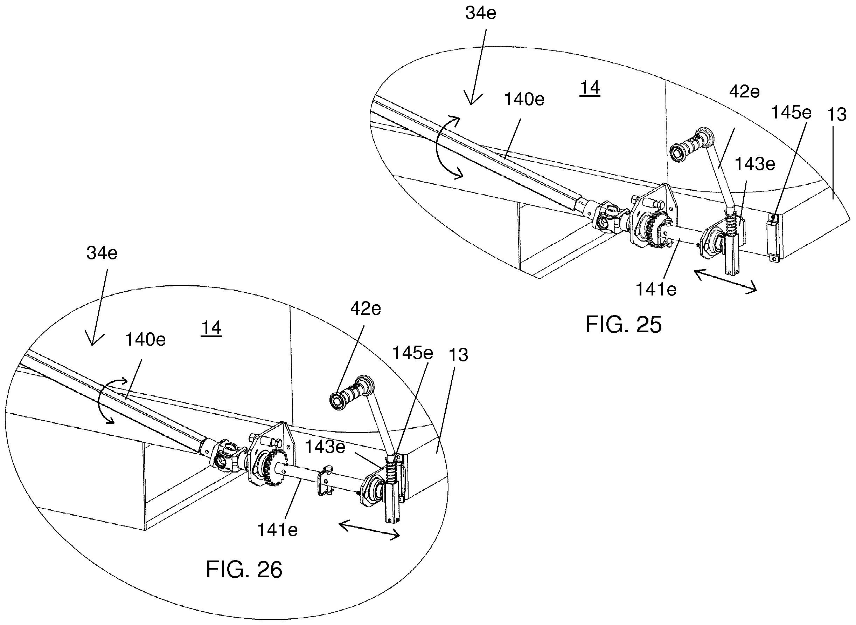

In yet other embodiments, as seen in FIGS. 25 and 26, an actuator assembly 34e is similar to the actuator assembly 34d except that the actuator assembly 34e includes a crank extension shaft 141e supporting the crank 42e. The crank extension shaft 141e is telescopic so as to be configurable between a retracted configuration (seen in FIG. 25) and an extended configuration (seen in FIG. 26). In the retracted configuration, the crank 42e is retracted from the container second end 33 so that the crank 42e is not exposed when not needed. In the extended configuration, the crank 32e protrudes from the container second end 33 so that the crank 42e can be operated as described hereinabove. In some embodiments, a crank securing member 143e is provided adjacent the crank 42e and engages a suitably shaped container securing member 145e to stabilize the crank 42e in the extended configuration.

The features of the various embodiments of the invention and variants of the various parts of these embodiments described above can be mixed together in any suitable manner.

Although the present invention has been described hereinabove by way of exemplary embodiments thereof, it will be readily appreciated that many modifications are possible in the exemplary embodiments without materially departing from the novel teachings and advantages of this invention. Accordingly, the scope of the claims should not be limited by the exemplary embodiments, but should be given the broadest interpretation consistent with the description as a whole.

## Claims

1. A device (10) for handling a tarpaulin (12) to cover at least part of a container (14) using the tarpaulin (12), the container (14) defining a container bottom wall (16), a container peripheral wall (18) extending therefrom and a container top aperture (20) delimited by a container top edge (19) of the container peripheral wall (18) opposed to the container bottom wall (16), the container top aperture (20) defining an aperture first end (24) and an opposed aperture second end (26), the tarpaulin (12) defining a tarpaulin first end (28) and an opposed tarpaulin second end (30), the tarpaulin (12) being secured to the container (14) at the tarpaulin first end (28) opposed to the aperture second end (26) and movable between tarpaulin retracted and extended configurations in which the tarpaulin (12) is respectively retracted from the container top aperture (20) and extended across the container top aperture (20), the device (10) comprising:
a rod (32) defining a rod longitudinal axis (38), the rod (32) being movable between rod first and second positions wherein the rod (32) is respectively adjacent the aperture first and second ends (24 and 26), the tarpaulin (12) being mountable to the rod (32) at the tarpaulin second end to allow rolling of the tarpaulin (12) thereonto and unrolling of the tarpaulin (12) therefrom when the rod (32) is rotated about the rod longitudinal axis (38);
an actuator assembly (34), the actuator assembly (34) including a motor (40) having a motor output shaft 70, a crank (42), and a driving shaft (44) defining a longitudinal driving shaft rotation axis (46), the actuator assembly (34) being configurable between a motorized configuration and a manual configuration, wherein, in the motorized configuration, the motor (40) is mechanically coupled to the driving shaft (44) for selectively rotating the driving shaft (44) about the driving shaft rotation axis (46) when the motor (40) is powered, and, in the manual configuration, the motor (40) is uncoupled from the driving shaft (44) and the crank (42) is mechanically coupled to the driving shaft (44) so that the crank (42) is usable to selectively rotate the driving shaft (44) independently of the motor (40); and
a transmission assembly (36) between the actuator assembly (34) and the rod (32), the transmission assembly (36) being operatively coupled to the actuator assembly (34) and to the rod (32) for transmitting rotations of the driving shaft (44) to the rod (32) so that rotation of the driving shaft (44) about the driving shaft rotation axis (46) causes rotation of the rod (32) about the rod longitudinal axis (38); wherein rotating the rod (32) using the actuator assembly (34) to roll the tarpaulin (12) therearound moves the rod (32) towards the rod first position to move the tarpaulin (12) to the tarpaulin retracted configuration and rotating the rod (32) using the actuator assembly (34) to unroll the tarpaulin (12) therefrom moves the rod (32) towards the rod second position to move the tarpaulin (12) to the tarpaulin extended configuration; **characterized in that** the actuator assembly (34) includes an intermediate shaft (52) mechanically coupled to the motor output shaft (70) so as to be rotatable thereby, the intermediate shaft (52) defining a shaft passageway (53) extending longitudinally therethrough coaxially with the driving shaft rotation axis (46), the driving shaft (44) extending in the shaft passageway (53) and protruding therefrom, the actuator assembly (34) further comprising a shaft coupling element (54) movable between coupling and uncoupling configurations, wherein in the coupling configuration, the shaft coupling element (54) couples the intermediate shaft (52) and driving shaft (44) to each other so that the motor output shaft (70) and the driving shaft (44) are jointly rotatable to rotate the the driving shaft (44) about the driving shaft rotation axis (46), and in the uncoupling configuration, the driving shaft (44) is rotatable about the driving shaft rotation axis (46) independently from the intermediate shaft (52).

2. The device (10) as defined in claim 1, further comprising a biasing element (48) operatively coupled to the rod (32) for biasing the rod (32) towards the rod second position.

3. The device (10) as defined in claim 1, wherein the intermediate shaft (52) defines an intermediate shaft coupling portion (56) and the driving shaft (44) defines a driving shaft coupling portion (58), the shaft coupling element (54) securing the intermediate and driving shaft coupling portions (56 and 58) to each other in the coupling configuration, the intermediate and driving shaft coupling portions (56 and 58) being adjacent to each other, wherein the shaft coupling element (54) includes a collar (60), the collar (60) receiving thereinto and overlapping at least part of each of the intermediate and driving shaft coupling portions (56 and 58) in the locking configuration, the intermediate and driving shaft coupling portions (56 and 58) each having a transversal cross-sectional configuration lacking continuous rotational symmetry, the collar (60) fittingly receiving the intermediate and driving shaft coupling portions (56 and 58) so that in the locking configuration, the collar (60) is jointly rotatable about the driving shaft rotation axis (46) along with the intermediate and driving shafts (52 and 44), optionally wherein the intermediate and driving shaft coupling portions (56 and 58) each have a polygonal transversal cross-sectional configuration.

4. The device (10) as defined in claim 3, wherein the shaft coupling element (54) is selectively lockable in the coupling configuration, optionally, wherein the shaft coupling element (54) also includes a locking pin (64), the driving shaft coupling portion (58) defining a pin receiving aperture (66) extending laterally therethrough, the collar (60) defining a pair of collar apertures (68) extending laterally therethrough laterally opposed to each other, wherein, in the coupling configuration, the collar apertures (68) are in register with the pin receiving aperture (66) and the locking pin (64) is insertable through both the collar apertures (68) and the pin receiving aperture (66) to lock the shaft coupling element (54) in the coupling configuration.

5. The device (10) as defined in any one of claims 1 to 4, wherein the driving shaft (44a) is provided with a driving shaft gear (45a) extending circumferentially therearound, the crank (42) being part of a crank assembly (43a) including a crank gear (39a) and a crank assembly body (37a), the crank (42) being operatively coupled to the crank gear (39a) for selectively rotating the crank gear (39a) relative to the crank assembly body (37a), the crank assembly body (37a) being mountable to a remainder of the actuator assembly (34a) so that the crank and driving shaft gears (39a and 45a) are engaged with each other so that rotation of the crank (42) causes rotation of the driving shaft (44a).

6. The device (10) as defined in any one of claims 2 to 5, wherein the transmission assembly (36) is configured and sized so that a distance between the driving shaft (44) and the rod (32) remains constant as the rod (32) moves between the rod first and second positions.

7. The device (10) as defined in any one of claims 2 to 6, further comprising a mounting bracket (106) secured to the actuator and transmission assemblies (34 and 36) for mounting the actuator and transmission assemblies (34 and 36) to the container peripheral wall (18), the mounting bracket (106) being configured and sized for allowing vertical movements of the actuator and transmission assemblies (34 and 36) relative to the container peripheral wall (18) when the mounting bracket is secured to the container peripheral wall, optionally wherein the mounting bracket (106) includes a base (108) fixedly securable to the container peripheral wall (18) and a pair of levers (112) extending parallel to each other and vertically spaced apart from each other, each lever (112) being pivotally mounted at one end thereof to the base (108) and pivotally mounted at another end thereof to one of the actuator and transmission assemblies (34 and 36).

8. The device (10) as defined in claim 7, wherein the transmission assembly (36) includes an elongated arm (90) defining an arm longitudinal axis (92), the arm (90) defining opposed arm first and second ends (94 and 96), the arm first end (94) being adjacent to the driving shaft (44) and the arm second end (96) being adjacent to the rod (32), the arm (90) being operatively coupled to the driving shaft (44) and rod (32) so that rotation of the driving shaft (44) about the driving shaft rotation axis (46) causes rotation of the arm (90) about the arm longitudinal axis (92), which in turn causes rotation of the rod (32) about the rod longitudinal axis (38), the arm (90) extending perpendicular to the rod (32) and being pivotable relative to the driving shaft (44) between arm first and second positions, wherein the rod (32) is respectively in the rod first and second positions, optionally wherein the arm (90) is a fixed length arm, further optionally wherein the transmission assembly (36) includes a first 90 degrees gearbox (100) between the arm (90) and the driving shaft (44) and a second 90 degrees gearbox (102) between the arm (90) and the rod (32), the arm (90) being coupled to the first 90 degrees gearbox (100) using a universal joint (104) to allow pivotal movement of the arm (90) between the arm first and second positions as the rod (32) moves between the rod first and second positions.

9. A covered vehicle container, comprising:
a container (14) defining a container bottom wall (16), a container top aperture (20) above the container bottom wall (16), opposed container first and second ends (11 and 13) and opposed container first and second sides (15 and 17) each extending between the container first and second ends (11 and 13), the container (14) defining at least one tarpaulin support (118) extending between the container first and second ends (11 and 13) across the container top aperture (20);
a tarpaulin (12) defining tarpaulin opposed first and second ends (28 and 30), the tarpaulin (12) being secured to the container first end (11) adjacent to the tarpaulin first end (28), the tarpaulin (12) being movable between tarpaulin retracted and extended configurations in which the tarpaulin (12) is respectively retracted from the container top aperture (20) and extended across the container top aperture (20); and
a device (10) for handling the tarpaulin as defined in any one of claims 1 to 8.

10. The covered vehicle container as defined in claim 9, wherein the transmission assembly (36) includes an elongated arm (90) defining an arm longitudinal axis (92), the arm (90) defining opposed arm first and second ends (94 and 96), the arm first end (94) being adjacent to the driving shaft (44) and the arm second end (96) being adjacent to the rod (32), the arm (90) being operatively coupled to the driving shaft (44) and rod (32) so that rotation of the driving shaft (44) about the driving shaft rotation axis (46) causes rotation of the arm (90) about the arm longitudinal axis (92), which in turn causes rotation of the rod (32) about the rod longitudinal axis (38), the arm (90) extending perpendicular to the rod (32) and being pivotable relative to the driving shaft (44) between arm first and second positions, wherein the rod (32) is respectively in the rod first and second positions further comprising a mounting bracket (106), the mounting bracket (106) including a base (108) fixedly mounted to the container (14) and a bracket mobile portion (110) movable vertically relative to the container (14), the arm (90) being mechanically coupled to the bracket mobile portion (110) at the arm first end (94) so that the arm first end (94) is vertically movable along with the bracket mobile portion (110), wherein the mounting bracket (106) includes a pair of levers (112) extending parallel to each other and vertically spaced apart from each other, each lever (112) being pivotally mounted at one end thereof to the base (108) and pivotally mounted at another end thereof to the bracket mobile portion (110) and wherein the actuator assembly (36) is mounted to the bracket mobile portion (110).

11. The covered vehicle container as defined in claim 10, wherein the base (108) is mounted to the container (14) on the container first side (17) midway between the container first and second ends (11 and 13).

12. The covered vehicle container as defined in claim 10, wherein the base (108) is mounted to the container (14) on the container first side (17) and wherein the actuator assembly (34) is mounted to the container (14) adjacent to one of the container first and second ends (11 and 13), the transmission assembly (36) including an intermediate gearbox (100b) and an extension shaft (140b), the extension shaft (140b) extending between the driving shaft (44b) and the intermediate gearbox (100b), the intermediate gearbox (100b) being mounted to the bracket mobile portion (110), and the arm (90) being mounted to the intermediate gearbox (100b), the actuator assembly (34), extension shaft (140b), intermediate gearbox (100b) and arm (90) being mechanically coupled to each other so that rotation of the driving shaft (44b) about the shaft longitudinal axis (46) causes rotation of the arm (90) about the arm longitudinal axis (92).

13. The covered vehicle container as defined in claim 12, wherein the actuator assembly (34b) includes a crank assembly (43b), the crank assembly (43b) including the crank (42b) and a crank assembly shaft (35b) axially rotatable by the crank (42b), the crank assembly shaft (35b) being coupled to the driving shaft (44b) axially through a bearing (31b) opposed to the crank (42b), the bearing (31b) allowing the crank assembly shaft (35b) and the driving shaft (44b) to rotate freely relative to each other, the actuator assembly (34b) including a collar (60) selectively movable so as to overlap jointly both the crank assembly shaft (35b) and driving shaft (44b), the collar (60), crank assembly shaft (35b) and driving shaft (44b) being configured and sized so that with the collar (60) overlapping the crank assembly shaft (35b) and driving shaft (44b), the crank assembly shaft (35b) and driving shaft (44b) are jointly rotatable.

14. The covered vehicle container as defined in any one of claims 9 to 13, further comprising a support rod (122) mounted to the tarpaulin (12) so as to extend laterally thereacross at a location intermediate the tarpaulin first and second ends (28 and 30), wherein the at least one tarpaulin support (118) includes at least two arches (120) spaced apart from each other and each extending across the container top aperture (20) between the container first and second ends (11 and 13).

## Patentansprüche

1. Vorrichtung (10) zum Handhaben einer Plane (12), um zumindest einen Teil eines Containers (14) mit der Plane (12) abzudecken, wobei der Container (14) eine Containerbodenwand (16), eine sich davon erstreckende Containerumfangswand (18) und eine obere Containeröffnung (20) definiert, die durch eine Containeroberkante (19) der Containerumfangswand (18) gegenüber der Containerbodenwand (16) begrenzt ist, wobei die obere Containeröffnung (20) ein erstes Öffnungsende (24) und ein gegenüberliegendes zweites Öffnungsende (26) definiert, wobei die Plane (12) ein erstes Planenende (28) und ein gegenüberliegendes zweites Planenende (30) definiert, wobei die Plane (12) am ersten Planenende (28), das dem zweiten Öffnungsende (26) gegenüberliegt, am Container (14) befestigt und zwischen einer eingezogenen und einer ausgezogenen Planenkonfiguration bewegbar ist, in denen die Plane (12) jeweils von der oberen Containeröffnung (20) eingezogen und über die obere Containeröffnung (20) ausgezogen ist, wobei die Vorrichtung (10) Folgendes umfasst:
- eine Stange (32), die eine Stangenlängsachse (38) definiert, wobei die Stange (32) zwischen einer ersten und einer zweiten Stangenposition beweglich ist, wobei die Stange (32) jeweils neben dem ersten und zweiten Ende (24 und 26) der Öffnung liegt, wobei die Plane (12) an der Stange (32) am zweiten Planenende befestigt werden kann, um das Aufrollen der Plane (12) darauf und das Abrollen der Plane (12) davon zu ermöglichen, wenn die Stange (32) um die Stangenlängsachse (38) gedreht wird;
- eine Stellantriebsanordnung (34), wobei die Stellantriebsanordnung (34) einen Motor (40) mit einer Motorabtriebswelle (70), einer Kurbel (42) und einer eine longitudinale Antriebswellendrehachse (46) definierenden Antriebswelle (44) aufweist, wobei die Stellantriebsanordnung (34) zwischen einer motorisierten Konfiguration und einer manuellen Konfiguration konfigurierbar ist, wobei in der motorisierten Konfiguration der Motor (40) mechanisch mit der Antriebswelle (44) gekoppelt ist, um die Antriebswelle (44) selektiv um die Antriebswellendrehachse (46) zu drehen, wenn der Motor (40) mit Strom versorgt wird, und in der manuellen Konfiguration der Motor (40) von der Antriebswelle (44) abgekoppelt ist und die Kurbel (42) mechanisch mit der Antriebswelle (44) gekoppelt ist, so dass die Kurbel (42) benutzt werden kann, um die Antriebswelle (44) unabhängig vom Motor (40) selektiv zu drehen; und
- eine Getriebeanordnung (36) zwischen der Stellantriebsanordnung (34) und der Stange (32), wobei die Getriebeanordnung (36) operativ mit der Stellantriebsanordnung (34) und der Stange (32) gekoppelt ist, um Drehungen der Antriebswelle (44) auf die Stange (32) zu übertragen, so dass eine Drehung der Antriebswelle (44) um die Antriebswellendrehachse (46) eine Drehung der Stange (32) um die Stangenlängsachse (38) bewirkt; wobei das Drehen der Stange (32) mit Hilfe der Stellantriebsanordnung (34), um die Plane (12) darum zu rollen, die Stange (32) in Richtung der ersten Position der Stange bewegt, um die Plane (12) in die eingezogene Konfiguration der Plane zu bewegen, und das Drehen der Stange (32) mit Hilfe der Stellantriebsanordnung (34), um die Plane (12) davon abzurollen, die Stange (32) in Richtung der zweiten Position der Stange bewegt, um die Plane (12) in die ausgezogene Konfiguration der Plane zu bewegen; **dadurch gekennzeichnet, dass** die Stellantriebsanordnung (34) eine Zwischenwelle (52) aufweist, die mechanisch mit der Motorabtriebswelle (70) gekoppelt ist, so dass sie davon gedreht werden kann, wobei die Zwischenwelle (52) einen Wellendurchgang (53) definiert, der sich longitudinal durch sie hindurch koaxial mit der Antriebswellendrehachse (46) erstreckt, wobei sich die Antriebswelle (44) im Wellendurchgang (53) erstreckt und davon vorsteht, wobei die Stellantriebsanordnung (34) ferner ein Wellenkopplungselement (54) aufweist, das zwischen einer Kopplungs- und einer Entkopplungskonfiguration bewegt werden kann, wobei in der Kopplungskonfiguration das Wellenkopplungselement (54) die Zwischenwelle (52) und die Antriebswelle (44) miteinander koppelt, so dass die Motorabtriebswelle (70) und die Antriebswelle (44) gemeinsam gedreht werden können, um die Antriebswelle (44) um die Antriebswellendrehachse (46) zu drehen, und in der Entkopplungskonfiguration die Antriebswelle (44) unabhängig von der Zwischenwelle (52) um die Antriebswellendrehachse (46) gedreht werden kann.

2. Vorrichtung (10) nach Anspruch 1, die ferner ein Vorspannelement (48) umfasst, das operativ mit der Stange (32) gekoppelt ist, um die Stange (32) in Richtung der zweiten Stangenposition vorzuspannen.

3. Vorrichtung (10) nach Anspruch 1, wobei die Zwischenwelle (52) einen Zwischenwellenkupplungsabschnitt (56) definiert und die Antriebswelle (44) einen Antriebswellenkupplungsabschnitt (58) definiert, wobei das Wellenkupplungselement (54) den Zwischen- und den Antriebswellenkupplungsabschnitt (56 und 58) in der Kupplungskonfiguration aneinander befestigt, wobei der Zwischen- und der Antriebswellenkupplungsabschnitt (56 und 58) nebeneinander liegen, wobei das Wellenkupplungselement (54) einen Kragen (60) aufweist, wobei der Kragen (60) in der Verriegelungskonfiguration zumindest einen Teil jedes der Zwischen- und Antriebswellenkupplungsabschnitte (56 und 58) aufnimmt und damit überlappt, wobei der Zwischen- und der Antriebswellenkupplungsabschnitt (56 und 58) jeweils eine transversale Querschnittskonfiguration ohne kontinuierliche Rotationssymmetrie aufweisen, wobei der Kragen (60) den Zwischen- und den Antriebswellenkupplungsabschnitt (56 und 58) passend aufnimmt, so dass der Kragen (60) in der Verriegelungskonfiguration zusammen mit der Zwischen- und der Antriebswelle (52 und 44) um die Antriebswellendrehachse (46) gedreht werden kann, wobei optional der Zwischen- und der Antriebswellenkupplungsabschnitt (56 und 58) jeweils eine polygonale transversale Querschnittskonfiguration haben.

4. Vorrichtung (10) nach Anspruch 3, wobei das Wellenkupplungselement (54) selektiv in der Kupplungskonfiguration verriegelbar ist, wobei optional das Wellenkupplungselement (54) auch einen Verriegelungsstift (64) aufweist, wobei der Antriebswellenkupplungsabschnitt (58) eine Stiftaufnahmeöffnung (66) definiert, die sich lateral durch ihn hindurch erstreckt, wobei der Kragen (60) ein Paar Kragenöffnungen (68) definiert, die sich lateral durch ihn hindurch erstrecken und einander lateral gegenüberliegen, wobei in der Kupplungskonfiguration die Kragenöffnungen (68) mit der Stiftaufnahmeöffnung (66) ausgerichtet sind und der Verriegelungsstift (64) sowohl durch die Kragenöffnungen (68) als auch durch die Stiftaufnahmeöffnung (66) eingeführt werden kann, um das Wellenkupplungselement (54) in der Kupplungskonfiguration zu verriegeln.

5. Vorrichtung (10) nach einem der Ansprüche 1 bis 4, wobei die Antriebswelle (44a) mit einem Antriebswellengetriebe (45a) versehen ist, das sich in Umfangsrichtung darum herum erstreckt, wobei die Kurbel (42) Teil einer Kurbelanordnung (43a) ist, die ein Kurbelgetriebe (39a) und einen Kurbelanordnungskörper (37a) umfasst, wobei die Kurbel (42) operativ mit dem Kurbelgetriebe (39a) gekoppelt ist, um das Kurbelgetriebe (39a) relativ zum Kurbelanordnungskörper (37a) selektiv zu drehen, wobei der Kurbelanordnungskörper (37a) an einem Rest der Stellantriebsanordnung (34a) montiert werden kann, so dass Kurbel- und Antriebswellengetriebe (39a und 45a) miteinander in Eingriff stehen, so dass eine Drehung der Kurbel (42) eine Drehung der Antriebswelle (44a) bewirkt.

6. Vorrichtung (10) nach einem der Ansprüche 2 bis 5, wobei die Getriebeanordnung (36) so konfiguriert und bemessen ist, dass ein Abstand zwischen der Antriebswelle (44) und der Stange (32) konstant bleibt, während sich die Stange (32) zwischen der ersten und der zweiten Stangenposition bewegt.

7. Vorrichtung (10) nach einem der Ansprüche 2 bis 6, die ferner eine an der Stellantriebs- und der Getriebeanordnung (34 und 36) befestigte Montagehalterung (106) zum Montieren der Stellantriebs- und Getriebeanordnung (34 und 36) an der Containerumfangswand (18) umfasst, wobei die Montagehalterung (106) so konfiguriert und bemessen ist, dass sie vertikale Bewegungen der Stellantriebs- und Getriebeanordnung (34 und 36) relativ zur Containerumfangswand (18) ermöglicht, wenn die Montagehalterung an der Containerumfangswand befestigt ist, wobei optional die Montagehalterung (106) eine Basis (108), die fest an der Containerumfangswand (18) befestigt werden kann, und ein Paar Hebel (112) umfasst, die sich parallel zueinander und vertikal voneinander beabstandet erstrecken, wobei jeder Hebel (112) an einem Ende schwenkbar an der Basis (108) und am anderen Ende schwenkbar an der Aktuator-oder der Getriebeanordnung (34 und 36) montiert ist.

8. Vorrichtung (10) nach Anspruch 7, wobei die Getriebeanordnung (36) einen länglichen Arm (90) aufweist, der eine Armlängsachse (92) definiert, wobei der Arm (90) ein erstes und ein gegenüberliegendes zweites Armende (94 und 96) definiert, wobei das erste Armende (94) neben der Antriebswelle (44) liegt und das zweite Armende (96) neben der Stange (32) liegt, wobei der Arm (90) operativ mit der Antriebswelle (44) und der Stange (32) gekoppelt ist, so dass eine Drehung der Antriebswelle (44) um die Antriebswellendrehachse (46) eine Drehung des Arms (90) um die Armlängsachse (92) bewirkt, die wiederum eine Drehung der Stange (32) um die Stangenlängsachse (38) bewirkt, wobei sich der Arm (90) lotrecht zur Stange (32) erstreckt und relativ zur Antriebswelle (44) zwischen einer ersten und einer zweiten Armposition schwenkbar ist, wobei die Stange (32) jeweils in der ersten und zweiten Stangenposition ist, wobei der Arm (90) optional ein Arm mit fester Länge ist, wobei ferner optional die Getriebeanordnung (36) ein erstes 90-Grad-Getriebe (100) zwischen dem Arm (90) und der Antriebswelle (44) und ein zweites 90-Grad-Getriebe (102) zwischen dem Arm (90) und der Stange (32) aufweist, wobei der Arm (90) mit dem ersten 90-Grad-Getriebe (100) mittels eines Universalgelenks (104) gekoppelt ist, um eine Schwenkbewegung des Arms (90) zwischen der ersten und zweiten Armposition zuzulassen, während sich die Stange (32) zwischen der ersten und zweiten Stangenposition bewegt.

9. Abgedeckter Fahrzeugcontainer, der Folgendes umfasst:
- einen Container (14), der eine Containerbodenwand (16), eine obere Containeröffnung (20) über der Containerbodenwand (16), ein erstes und ein gegenüberliegendes zweites Containerende (11 und 13) und eine erste und eine gegenüberliegende zweite Containerseite (15 und 17) definiert, die sich jeweils zwischen dem ersten und zweiten Containerende (11 und 13) erstrecken, wobei der Container (14) mindestens eine Planenauflage (118) definiert, die sich zwischen dem ersten und zweiten Containerende (11 und 13) über die obere Containeröffnung (20) erstreckt;
- eine Plane (12), die ein erstes und ein gegenüberliegendes zweites Planenende (28 und 30) definiert, wobei die Plane (12) am ersten Containerende (11) neben dem ersten Planenende (28) befestigt ist, wobei die Plane (12) zwischen einer eingezogenen und einer ausgezogenen Konfiguration der Plane bewegbar ist, in der die Plane (12) jeweils von der oberen Containeröffnung (20) eingezogen und über die obere Containeröffnung (20) ausgezogen ist; und
- eine Vorrichtung (10) zur Handhabung der Plane nach einem der Ansprüche 1 bis 8.

10. Abgedeckter Fahrzeugcontainer nach Anspruch 9, wobei die Getriebeanordnung (36) einen länglichen Arm (90) aufweist, der eine Armlängsachse (92) definiert, wobei der Arm (90) ein erstes und ein gegenüberliegendes zweites Ende (94 und 96) des Arms definiert, wobei das erste Armende (94) neben der Antriebswelle (44) liegt und das zweite Armende (96) neben der Stange (32) liegt, wobei der Arm (90) operativ mit der Antriebswelle (44) und der Stange (32) gekoppelt ist, so dass eine Drehung der Antriebswelle (44) um die Antriebswellendrehachse (46) eine Drehung des Arms (90) um die Armlängsachse (92) bewirkt, die wiederum eine Drehung der Stange (32) um die Stangenlängsachse (38) bewirkt, wobei sich der Arm (90) lotrecht zur Stange (32) erstreckt und relativ zur Antriebswelle (44) zwischen einer ersten und einer zweiten Armposition schwenkbar ist, wobei die Stange (32) jeweils in der ersten und zweiten Stangenposition ist, ferner umfassend eine Montagehalterung (106), wobei die Montagehalterung (106) eine Basis (108), die fest am Container (14) montiert ist, und einen beweglichen Halterungsabschnitt (110) umfasst, der vertikal relativ zum Container (14) beweglich ist, wobei der Arm (90) mechanisch mit dem beweglichen Halterungsabschnitt (110) am ersten Armende (94) gekoppelt ist, so dass das erste Armende (94) vertikal zusammen mit dem beweglichen Halterungsabschnitt (110) beweglich ist, wobei die Montagehalterung (106) ein Paar Hebel (112) aufweist, die sich parallel zueinander und vertikal voneinander beabstandet erstrecken, wobei jeder Hebel (112) an einem Ende schwenkbar an der Basis (108) und am anderen Ende schwenkbar am beweglichen Halterungsabschnitt (110) angebracht ist, und wobei die Stellantriebsanordnung (36) am beweglichen Halterungsabschnitt (110) angebracht ist.

11. Abgedeckter Fahrzeugcontainer nach Anspruch 10, wobei die Basis (108) am Container (14) auf der ersten Containerseite (17) in der Mitte zwischen dem ersten und zweiten Containerende (11 und 13) befestigt ist.

12. Abgedeckter Fahrzeugcontainer nach Anspruch 10, wobei die Basis (108) am Container (14) auf der ersten Containerseite (17) montiert ist und wobei die Stellantriebsanordnung (34) am Container (14) neben dem ersten oder zweiten Containerende (11 und 13) montiert ist, wobei die Getriebeanordnung (36) ein Zwischengetriebe (100b) und eine Verlängerungswelle (140b) umfasst, wobei sich die Verlängerungswelle (140b) zwischen der Antriebswelle (44b) und dem Zwischengetriebe (100b) erstreckt, wobei das Zwischengetriebe (100b) am beweglichen Halterungsabschnitt (110) angebracht ist und der Arm (90) am Zwischengetriebe (100b) angebracht ist, wobei die Stellantriebsanordnung (34), die Verlängerungswelle (140b), das Zwischengetriebe (100b) und der Arm (90) mechanisch miteinander gekoppelt sind, so dass eine Drehung der Antriebswelle (44b) um die Wellenlängsachse (46) eine Drehung des Arms (90) um die Armlängsachse (92) bewirkt.

13. Abgedeckter Fahrzeugcontainer nach Anspruch 12, wobei die Stellantriebsanordnung (34b) eine Kurbelanordnung (43b) umfasst, wobei die Kurbelanordnung (43b) die Kurbel (42b) und eine Kurbelanordnungswelle (35b) umfasst, die von der Kurbel (42b) axial gedreht werden kann, wobei die Kurbelanordnungswelle (35b) mit der Antriebswelle (44b) axial durch ein der Kurbel (42b) gegenüberliegendes Lager (31b) gekoppelt ist, wobei das Lager (31b) es zulässt, dass sich die Kurbelanordnungswelle (35b) und die Antriebswelle (44b) frei relativ zueinander drehen, wobei die Stellantriebsanordnung (34b) einen Kragen (60) aufweist, der selektiv beweglich ist, so dass er sowohl die Kurbelanordnungswelle (35b) als auch die Antriebswelle (44b) gemeinsam überlappt, wobei der Kragen (60), die Kurbelanordnungswelle (35b) und die Antriebswelle (44b) so konfiguriert und bemessen sind, dass, wenn der Kragen (60) die Kurbelanordnungswelle (35b) und die Antriebswelle (44b) überlappt, die Kurbelanordnungswelle (35b) und die Antriebswelle (44b) gemeinsam drehbar sind.

14. Abgedeckter Fahrzeugcontainer nach einem der Ansprüche 9 bis 13, der ferner eine Stützstange (122) umfasst, die so an der Plane (12) montiert ist, dass sie sich an einer Stelle zwischen dem ersten und dem zweiten Planenende (28 und 30) lateral darüber erstreckt, wobei die mindestens eine Planenauflage (118) mindestens zwei Bögen (120) aufweist, die voneinander beabstandet sind und sich jeweils über die obere Containeröffnung (20) zwischen dem ersten und dem zweiten Containerende (11 und 13) erstrecken.

## Revendications

1. Dispositif (10) pour manipuler une bâche (12) afin de couvrir au moins une partie d'un conteneur (14) utilisant la bâche (12), le conteneur (14) définissant une paroi inférieure de conteneur (16), une paroi périphérique de conteneur (18) s'étendant à partir de celle-ci et une ouverture supérieure de conteneur (20) délimitée par un bord supérieur de conteneur (19) de la paroi périphérique de conteneur (18) opposé à la paroi inférieure de conteneur (16), l'ouverture supérieure de conteneur (20) définissant une première extrémité d'ouverture (24) et une deuxième extrémité d'ouverture opposée (26), la bâche (12) définissant une première extrémité de bâche (28) et une deuxième extrémité de bâche opposée (30), la bâche (12) étant attachée au conteneur (14) au niveau de la première extrémité de bâche (28) qui est opposée à la deuxième extrémité d'ouverture (26) et apte à être déplacée entre des configurations rétractée et étendue de bâche dans lesquelles la bâche (12) est respectivement rétractée de l'ouverture supérieure de conteneur (20) et étendue en travers de l'ouverture supérieure de conteneur (20), le dispositif (10) comprenant :
- une tige (32) définissant un axe longitudinal de tige (38), la tige (32) étant apte à être déplacée entre des première et deuxième positions de tige dans lesquelles la tige (32) est adjacente respectivement aux première et deuxième extrémités d'ouverture (24 et 26), la bâche (12) pouvant être montée sur la tige (32) au niveau de la deuxième extrémité de bâche pour permettre l'enroulement de la bâche (12) sur celle-ci et le déroulement de la bâche (12) à partir de celle-ci lorsque la tige (32) est tournée autour de l'axe longitudinal de tige (38) ;
- un ensemble actionneur (34), l'ensemble actionneur (34) incluant un moteur (40) ayant un arbre de sortie de moteur (70), une manivelle (42), et un arbre d'entraînement (44) définissant un axe de rotation d'arbre d'entraînement longitudinal (46), l'ensemble actionneur (34) étant configurable entre une configuration motorisée et une configuration manuelle, dans lesquelles, dans la configuration motorisée, le moteur (40) est couplé mécaniquement à l'arbre d'entraînement (44) pour faire tourner sélectivement l'arbre d'entraînement (44) autour de l'axe de rotation d'arbre d'entraînement (46) lorsque le moteur (40) est sous tension, et, dans la configuration manuelle, le moteur (40) est découplé de l'arbre d'entraînement (44) et la manivelle (42) est couplée mécaniquement à l'arbre d'entraînement (44) de sorte que la manivelle (42) soit utilisable pour faire tourner sélectivement l'arbre d'entraînement (44) indépendamment du moteur (40) ; et
- un ensemble transmission (36) entre l'ensemble actionneur (34) et la tige (32), l'ensemble transmission (36) étant couplé de manière opérationnelle à l'ensemble actionneur (34) et à la tige (32) afin de transmettre des rotations de l'arbre d'entraînement (44) à la tige (32) de sorte qu'une rotation de l'arbre d'entraînement (44) autour de l'axe de rotation d'arbre d'entraînement (46) provoque une rotation de la tige (32) autour de l'axe longitudinal de tige (38) ; dans lequel l'action de rotation de la tige (32) en utilisant l'ensemble actionneur (34) pour enrouler la bâche (12) autour de celle-ci fait déplacer la tige (32) vers la première position de tige afin de déplacer la bâche (12) vers la configuration rétractée de bâche et l'action de rotation de la tige (32) en utilisant l'ensemble actionneur (34) pour dérouler la bâche (12) à partir de celle-ci fait déplacer la tige (32) vers la deuxième position de tige afin de déplacer la bâche (12) vers la configuration étendue de bâche ; **caractérisé en ce que** l'ensemble actionneur (34) inclut un arbre intermédiaire (52) couplé mécaniquement à l'arbre de sortie de moteur (70) de sorte à pouvoir être tourné par celui-ci, l'arbre intermédiaire (52) définissant un passage d'arbre (53) s'étendant longitudinalement à travers celui-ci dans un plan coaxial avec l'axe de rotation d'arbre d'entraînement (46), l'arbre d'entraînement (44) s'étendant dans le passage d'arbre (53) et faisant saillie à partir de celui-ci, l'ensemble actionneur (34) comprenant en outre un élément de couplage d'arbres (54) apte à être déplacé entre des configurations de couplage et de découplage, dans lequel dans la configuration de couplage, l'élément de couplage d'arbres (54) couple l'arbre intermédiaire (52) et l'arbre d'entraînement (44) l'un à l'autre de sorte que l'arbre de sortie de moteur (70) et l'arbre d'entraînement (44) soient aptes à être tournés conjointement afin de tourner l'arbre d'entraînement (44) autour de l'axe de rotation d'arbre d'entraînement (46), et dans la configuration de découplage, l'arbre d'entraînement (44) est apte à être tourné autour de l'axe de rotation d'arbre d'entraînement (46) indépendamment de l'arbre intermédiaire (52) .

2. Dispositif (10) tel que défini dans la revendication 1, comprenant en outre un élément de sollicitation (48) couplé de manière opérationnelle à la tige (32) pour solliciter la tige (32) vers la deuxième position de tige.

3. Dispositif (10) tel que défini dans la revendication 1, dans lequel l'arbre intermédiaire (52) définit une portion de couplage d'arbre intermédiaire (56) et l'arbre d'entraînement (44) définit une portion de couplage d'arbre d'entraînement (58), l'élément de couplage d'arbres (54) attachant les portions de couplage d'arbre d'entraînement et intermédiaire (56 et 58) l'une à l'autre dans la configuration de couplage, les portions de couplage d'arbre d'entraînement et intermédiaire (56 et 58) étant adjacentes l'une à l'autre, dans lequel l'élément de couplage d'arbres (54) inclut un collier (60), le collier (60) recevant dans celui-ci et chevauchant au moins une partie de chacune des portions de couplage d'arbre d'entraînement et intermédiaire (56 et 58) dans la configuration de verrouillage, les portions de couplage d'arbre d'entraînement et intermédiaire (56 et 58) ayant chacune une configuration transversale en coupe transversale à laquelle manque une symétrie continue en rotation, le collier (60) recevant de manière adaptée les portions de couplage d'arbre d'entraînement et intermédiaire (56 et 58) de sorte que dans la configuration de verrouillage, le collier (60) soit apte à être tourné conjointement autour de l'axe de rotation d'arbre d'entraînement (46) en conjonction avec les arbres d'entraînement et intermédiaire (52 et 44), facultativement dans lequel les portions de couplage d'arbre d'entraînement et intermédiaire (56 et 58) ont chacune une configuration transversale polygonale en coupe transversale.

4. Dispositif (10) tel que défini dans la revendication 3, dans lequel l'élément de couplage d'arbres (54) est verrouillable sélectivement dans la configuration de couplage, facultativement, dans lequel l'élément de couplage d'arbres (54) inclut également une broche de verrouillage (64), la portion de couplage d'arbre d'entraînement (58) définissant une ouverture de réception de broche (66) qui s'étend latéralement à travers celle-ci, le collier (60) définissant une paire d'ouvertures de collier (68) qui s'étendent latéralement à travers celui-ci en se faisant face l'une l'autre dans un plan latéral, dans lequel, dans la configuration de couplage, les ouvertures de collier (68) sont en alignement avec l'ouverture de réception de broche (66) et la broche de verrouillage (64) est apte à être insérée à travers à la fois les ouvertures de collier (68) et l'ouverture de réception de broche (66) afin de verrouiller l'élément de couplage d'arbres (54) dans la configuration de couplage.

5. Dispositif (10) tel que défini dans l'une quelconque des revendications 1 à 4, dans lequel l'arbre d'entraînement (44a) est muni d'un pignon d'arbre d'entraînement (45a) s'étendant dans un plan circonférentiel autour de celui-ci, la manivelle (42) faisant partie d'un ensemble manivelle (43a) incluant un pignon de manivelle (39a) et un corps d'ensemble manivelle (37a), la manivelle (42) étant couplée de manière opérationnelle au pignon de manivelle (39a) pour faire tourner de manière sélective le pignon de manivelle (39a) relativement au corps d'ensemble manivelle (37a), le corps d'ensemble manivelle (37a) pouvant être monté sur un reste de l'ensemble actionneur (34a) de sorte que les pignons d'arbre d'entraînement et de manivelle (39a et 45a) soient en prise l'un avec l'autre de sorte qu'une rotation de la manivelle (42) provoque une rotation de l'arbre d'entraînement (44a).

6. Dispositif (10) tel que défini dans l'une quelconque des revendications 2 à 5, dans lequel l'ensemble transmission (36) est configuré et dimensionné de sorte qu'une distance entre l'arbre d'entraînement (44) et la tige (32) reste constante au fur et à mesure que la tige (32) se déplace entre les première et deuxième positions de tige.

7. Dispositif (10) tel que défini dans l'une quelconque des revendications 2 à 6, comprenant en outre une console de montage (106) attachée aux ensembles transmission et actionneur (34 et 36) pour monter les ensembles transmission et actionneur (34 et 36) sur la paroi périphérique de conteneur (18), la console de montage (106) étant configurée et dimensionnée de façon à permettre des mouvements verticaux des ensembles transmission et actionneur (34 et 36) relativement à la paroi périphérique de conteneur (18) lorsque la console de montage est attachée à la paroi périphérique de conteneur, facultativement dans lequel la console de montage (106) inclut une base (108) apte à être attachée de manière fixe à la paroi périphérique de conteneur (18) et une paire de leviers (112) qui s'étendent parallèlement l'un à l'autre et qui sont espacés verticalement l'un par rapport à l'autre, chaque levier (112) étant monté de manière pivotante au niveau d'une extrémité sur la base (108) et monté de manière pivotante au niveau d'une autre extrémité sur un ensemble parmi les ensembles transmission et actioneur (34 et 36).

8. Dispositif (10) tel que défini dans la revendication 7, dans lequel l'ensemble transmission (36) inclut un bras allongé (90) définissant un axe longitudinal de bras (92), le bras (90) définissant des première et deuxième extrémités de bras opposées (94 et 96), la première extrémité de bras (94) étant adjacente à l'arbre d'entraînement (44) et la deuxième extrémité de bras (96) étant adjacente à la tige (32), le bras (90) étant couplé de manière opérationnelle à l'arbre d'entraînement (44) et à la tige (32) de sorte qu'une rotation de l'arbre d'entraînement (44) autour de l'axe de rotation d'arbre d'entraînement (46) provoque une rotation du bras (90) autour de l'axe longitudinal de bras (92), ce qui à son tour provoque une rotation de la tige (32) autour de l'axe longitudinal de tige (38), le bras (90) s'étendant perpendiculairement à la tige (32) et étant apte à être pivoté relativement à l'arbre d'entraînement (44) entre des première et deuxième positions de bras, dans lequel la tige (32) se trouve respectivement dans les première et deuxième positions de tige, facultativement dans lequel le bras (90) a une longueur de bras fixe, en outre facultativement dans lequel l'ensemble transmission (36) inclut une première boîte de vitesses à 90 degrés (100) entre le bras (90) et l'arbre d'entraînement (44) et une deuxième boîte de vitesses à 90 degrés (102) entre le bras (90) et la tige (32), le bras (90) étant couplé à la première boîte de vitesses à 90 degrés (100) grâce à l'utilisation d'un joint cardan (104) afin de permettre un mouvement de pivotement du bras (90) entre les première et deuxième positions de bras au fur et à mesure que la tige (32) se déplace entre les première et deuxième positions de tige.

9. Conteneur de véhicule couvert, comprenant :
- un conteneur (14) définissant une paroi inférieure de conteneur (16), une ouverture supérieure de conteneur (20) au-dessus de la paroi inférieure de conteneur (16), des première et deuxième extrémités de conteneur opposées (11 et 13) et des premier et deuxième côtés de conteneur opposés (15 et 17) chacun s'étendant entre les première et deuxième extrémités de conteneur (11 et 13), le conteneur (14) définissant au moins un support de bâche (118) s'étendant entre les première et deuxième extrémités de conteneur (11 et 13) en travers de l'ouverture supérieure de conteneur (20) ;
- une bâche (12) définissant des première et deuxième extrémités opposées de bâche (28 et 30), la bâche (12) étant attachée à la première extrémité de conteneur (11) adjacente à la première extrémité de bâche (28), la bâche (12) étant apte à être déplacée entre des configurations rétractée et étendue de bâche dans lesquelles la bâche (12) est respectivement rétractée de l'ouverture supérieure de conteneur (20) et étendue en travers de l'ouverture supérieure de conteneur (20) ; et
- un dispositif (10) pour manipuler la bâche tel que défini dans l'une quelconque des revendications 1 à 8.

10. Conteneur de véhicule couvert tel que défini dans la revendication 9, dans lequel l'ensemble transmission (36) inclut un bras allongé (90) définissant un axe longitudinal de bras (92), le bras (90) définissant des première et deuxième extrémités de bras opposées (94 et 96), la première extrémité de bras (94) étant adjacente à l'arbre d'entraînement (44) et la deuxième extrémité de bras (96) étant adjacente à la tige (32), le bras (90) étant couplé de manière opérationnelle à l'arbre d'entraînement (44) et à la tige (32) de sorte qu'une rotation de l'arbre d'entraînement (44) autour de l'axe de rotation d'arbre d'entraînement (46) provoque une rotation du bras (90) autour de l'axe longitudinal de bras (92), ce qui à son tour provoque une rotation de la tige (32) autour de l'axe longitudinal de tige (38), le bras (90) s'étendant perpendiculairement à la tige (32) et étant apte à être pivoté relativement à l'arbre d'entraînement (44) entre des première et deuxième positions de bras, dans lequel la tige (32) se trouve respectivement dans les première et deuxième positions de tige comprenant en outre une console de montage (106), la console de montage (106) incluant une base (108) montée de manière fixe sur le conteneur (14) et une portion mobile de console (110) apte à être déplacée verticalement relativement au conteneur (14), le bras (90) étant couplé mécaniquement à la portion mobile de console (110) au niveau de la première extrémité de bras (94) de sorte que la première extrémité de bras (94) soit apte à être déplacée verticalement en conjonction avec la portion mobile de console (110), dans lequel la console de montage (106) inclut une paire de leviers (112) qui s'étendent en parallèle l'un à l'autre et sont espacés verticalement l'un par rapport à l'autre, chaque levier (112) étant monté de manière pivotante au niveau d'une extrémité sur la base (108) et monté de manière pivotante au niveau d'une autre extrémité sur la portion mobile de console (110) et dans lequel l'ensemble actionneur (36) est monté sur la portion mobile de console (110).

11. Conteneur de véhicule couvert tel que défini dans la revendication 10, dans lequel la base (108) est montée sur le conteneur (14) sur le premier côté de conteneur (17) à mi-chemin entre les première et deuxième extrémités de conteneur (11 et 13).

12. Conteneur de véhicule couvert tel que défini dans la revendication 10, dans lequel la base (108) est montée sur le conteneur (14) sur le premier côté de conteneur (17) et dans lequel l'ensemble actionneur (34) est monté sur le conteneur (14) de manière adjacente à une extrémité parmi les première et deuxième extrémités de conteneur (11 et 13), l'ensemble transmission (36) incluant une boîte de vitesses intermédiaire (100b) et un arbre d'extension (140b), l'arbre d'extension (140b) s'étendant entre l'arbre d'entraînement (44b) et la boîte de vitesses intermédiaire (100b), la boîte de vitesses intermédiaire (100b) étant montée sur la portion mobile de console (110), et le bras (90) étant monté sur la boîte de vitesses intermédiaire (100b), l'ensemble actionneur (34), l'arbre d'extension (140b), la boîte de vitesses intermédiaire (100b) et le bras (90) étant couplés mécaniquement les uns aux autres de sorte qu'une rotation de l'arbre d'entraînement (44b) autour de l'axe longitudinal d'arbre (46) provoque une rotation du bras (90) autour de l'axe longitudinal de bras (92) .

13. Conteneur de véhicule couvert tel que défini dans la revendication 12, dans lequel l'ensemble actionneur (34b) inclut un ensemble manivelle (43b), l'ensemble manivelle (43b) incluant la manivelle (42b) et un arbre d'ensemble manivelle (35b) apte à être tourné axialement par la manivelle (42b), l'arbre d'ensemble manivelle (35b) étant couplé à l'arbre d'entraînement (44b) dans le plan axial par l'intermédiaire d'un palier (31b) opposé à la manivelle (42b), le palier (31b) permettant à l'arbre d'ensemble manivelle (35b) et à l'arbre d'entraînement (44b) de tourner librement relativement l'un à l'autre, l'ensemble actionneur (34b) incluant un collier (60) apte à être déplacé sélectivement de sorte à chevaucher conjointement à la fois l'arbre d'ensemble manivelle (35b) et l'arbre d'entraînement (44b), le collier (60), l'arbre d'ensemble manivelle (35b) et l'arbre d'entraînement (44b) étant configurés et dimensionnés de sorte qu'avec le collier (60) en chevauchement sur l'arbre d'ensemble manivelle (35b) et l'arbre d'entraînement (44b), l'arbre d'ensemble manivelle (35b) et l'arbre d'entraînement (44b) soient aptes à être tournés conjointement.

14. Conteneur de véhicule couvert tel que défini dans l'une quelconque des revendications 9 à 13, comprenant en outre une tige de support (122) montée sur la bâche (12) de sorte à s'étendre latéralement en travers de celle-ci au niveau d'un emplacement entre les première et deuxième extrémités de bâche (28 et 30), dans lequel l'au moins un support de bâche (118) inclut au moins deux arches (120) espacées l'une de l'autre et chacune s'étendant en travers de l'ouverture supérieure de conteneur (20) entre les première et deuxième extrémités de conteneur (11 et 13).
